(19) Europäisches Patentamt
European Patent Office
Office européen des brevets

(11) **EP 2 543 563 B1**

(12) **EUROPEAN PATENT SPECIFICATION**

(45) Date of publication and mention
of the grant of the patent:
**10.01.2018  Bulletin 2018/02**

(21) Application number: **11750674.1**

(22) Date of filing: **02.03.2011**

(51) Int Cl.:
***B60T 8/1755*** (2006.01)

(86) International application number:
**PCT/JP2011/054702**

(87) International publication number:
**WO 2011/108565 (09.09.2011 Gazette 2011/36)**

(54) **TURNING CONTROL DEVICE FOR VEHICLE**

VORRICHTUNG ZUR REGELUNG DER KURVENFAHRT FÜR KRAFTFAHRZEUG

DISPOSITIF DE COMMANDE DE VIRAGE DESTINÉ À UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2010  JP 2010047838
04.03.2010  JP 2010047837
04.03.2010  JP 2010047836
04.03.2010  JP 2010047835**

(43) Date of publication of application:
**09.01.2013  Bulletin 2013/02**

(73) Proprietor: **Honda Motor Co., Ltd.
Minato-ku
Tokyo 107-8556 (JP)**

(72) Inventors:
• **FUTAMURA Tomoyuki
Wako-shi
Saitama 351-0193 (JP)**
• **KOJIMA Takeshi
Wako-shi
Saitama 351-0193 (JP)**
• **OHMURA Kazutaka
Wako-shi
Saitama 351-0193 (JP)**

(74) Representative: **Weickmann & Weickmann
PartmbB
Postfach 860 820
81635 München (DE)**

(56) References cited:
**EP-A2- 1 338 490        DE-A1- 19 636 920
JP-A- 2000 071 961    JP-A- 2002 037 048
JP-A- 2002 037 048    JP-A- 2002 127 886
US-A- 5 720 533**

**Description**

BACKGROUND OF THE INVENTION

Field of the Invention

The present invention relates to a vehicle turning control device that controls the turning of a vehicle by using braking.

Description of the Related Art

Among this type of turning control device, a turning control device is known that achieves a stabilization of vehicle behavior by performing braking control on specific wheels in a direction in which the deviation between the lateral acceleration (i.e., acceleration in the vehicle transverse direction) standard yaw rate, which is calculated based on the lateral acceleration of the vehicle and on the vehicle speed, and the vehicle's actual yaw rate approaches zero.

Another turning control device is known in which, when braking is performed by this device, it assists the yaw moment by performing control in accordance with the turning state (for example, the steering angle of the steering wheel and the rate of change in this steering angle) of the vehicle so as to vary the braking force between the left and right front wheels, and so as to also vary the braking force between the left and right rear wheels, so that an improvement in the turning performance of the vehicle can be achieved(see, for example, Japanese Patent No. 2572860 (Patent document 1)).

Moreover, a device is also known that achieves an improvement in the turning performance of the vehicle by calculating a corrected yaw moment by adding together a first yaw moment, which is calculated based on the steering angle speed or on the steering angle acceleration, and a second yaw moment, which is calculated based on the steering angle, the vehicle speed, and the yaw rate, and by then performing control so as to vary the braking force between the left and right front wheels, and so as to also vary the braking force between the left and right rear wheels, such that this corrected yaw moment is generated (see, for example, Japanese Unexamined Patent Application No. 2005-153716 (Patent document 2)).

However, in the turning control device described in Patent document 1, when the device is performing braking at the same time as the vehicle is turning, because the yaw moment is constantly assisted, it is possible that the yaw moment will become excessively large and that the stability of the vehicle will deteriorate, so that this turning control device is not realistically useable.

Furthermore, in the turning control device described in Patent document 2, when the vehicle turns suddenly (i.e., when there are a large steering angle speed and a large steering angle acceleration), the first yaw moment is reflected hugely. Although there is an improvement in the turning performance of the vehicle at such times, during normal turning, there is no effective improvement in the turning performance of the vehicle. Because of this, a turning control device that is able to achieve an improvement in the turning performance even when a vehicle is making a normal turn is strongly desired.

Furthermore, documents JP 2002-037048 A and DE 106 36 920 A1 disclose vehicle turning control devices capable of generating a yaw moment in the vehicle body by applying brake forces to left and right wheels based on a running state of a vehicle. Said devices comprise steering amount detecting devices, vehicle speed detecting devices, assist amount setting devices for controlling a turning assist amount based on detecting signals from the steering amount detecting device, a braking force control amount operating section which operates based on the turning assist amount derived by the assist amount setting section, and a braking control device controlling the brake force to be applied based on the braking force control amount. Furthermore, the assist amount setting devices set the turning assist amount such that its gain is raised as the speed of the vehicle decreases.

SUMMARY OF THE INVENTION

The present invention provides a vehicle turning control device that is also able to achieve an improvement in the turning performance when a vehicle is making a normal turn.

In the vehicle turning control device according to this invention, the means according to claim 1 are employed in order to solve the above-described problem.

BRIEF DESCRIPTION OF THE DRAWINGS

EP 2 543 563 B1

FIG. 1 is a control block diagram for a vehicle turning control device according to a first embodiment of this invention.

FIG. 2 is a block diagram of a correcting section in the same embodiment.

FIG. 3 is a view illustrating a relationship between a lateral G standard yaw rate, a steering angle standard yaw rate, and a limit standard yaw rate in the same embodiment.

FIG. 4 is a view illustrating a method of calculating a distribution coefficient HB1 in the same embodiment.

FIG. 5 is a view illustrating a method of calculating a correction coefficient HS1 in the same embodiment.

FIG. 6 is a flowchart showing a processing routine to decide a correction coefficient HS2 in the same embodiment.

FIG. 7 is a view illustrating a method of calculating a correction coefficient HS3 in the same embodiment.

FIG. 8 is a block diagram of a braking force control amount calculation (i.e., a braking amount operating section) in the same embodiment.

FIG. 9 is a control block diagram for a vehicle turning control device according to a second embodiment of this invention.

FIG. 10 is a block diagram of a braking force control amount calculation (i.e., a braking amount operating section) in the same embodiment.

FIG. 11 is a view illustrating a method of calculating the correction coefficient HS3 in a vehicle turning control device according to a third embodiment of this invention.

FIG. 12 is a view illustrating another method of calculating the correction coefficient HS3 in the same embodiment.

FIG. 13 is a control block diagram for a vehicle turning control device according to a fourth embodiment of this invention.

FIG. 14 is a block diagram of a braking force control amount calculation (i.e., a braking amount operating section) in the same embodiment.

FIG. 15A is a view illustrating the yaw moment increase action in the vehicle turning control device of the same embodiment when the vehicle is travelling at medium speed.

FIG. 15B is a view illustrating the yaw moment increase action in the vehicle turning control device of the same embodiment when the vehicle is travelling at low speed.

## DETAILED DESCRIPTION OF THE PREFERRED EMBODIMENTS

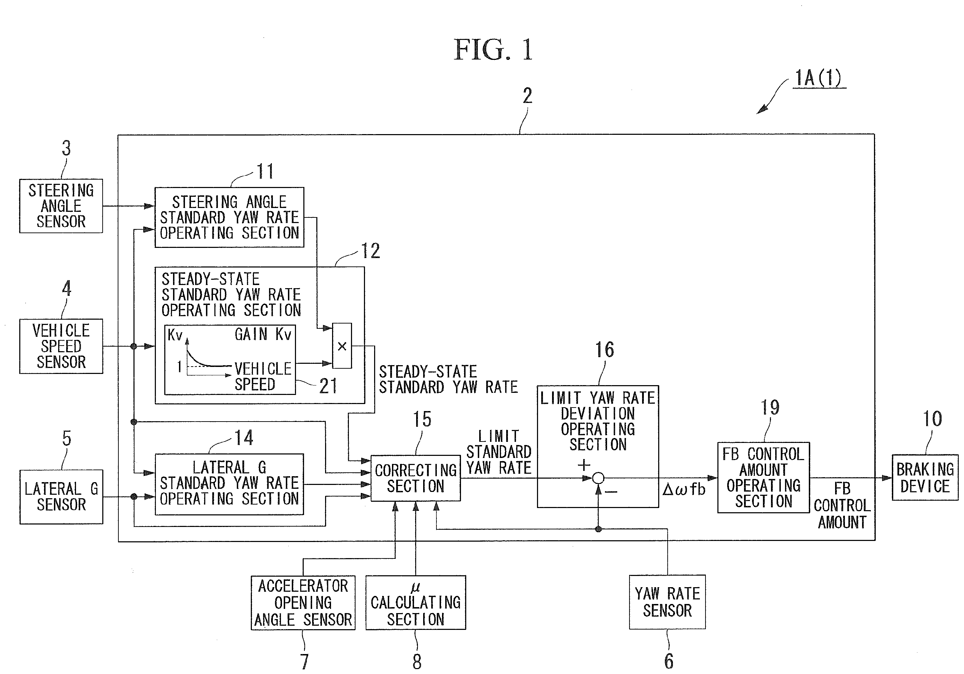

Hereinafter, embodiments of the vehicle turning control device according to this invention will be described with reference made to FIGS. 1 to 15B.

[First embodiment]

Firstly, the vehicle turning control device according to a first embodiment of this invention will be described with reference made to FIGS. 1 to 10.

FIG. 1 is a control block diagram of the vehicle turning control device according to the first embodiment.

A vehicle turning control device 1A (1) of the present embodiment is provided with a braking control section 2, and a braking device (i.e., a braking control device) 10.

The braking control section 2 decides the amounts of braking force control to be applied to the front and rear, left and right wheels of a vehicle in accordance with the running state of the vehicle. The braking device 10 controls the braking force of each wheel based on the amounts of braking force control for each wheel decided by the braking control section 2.

Detection signals that correspond to detection values obtained from various sensors are input into the braking control section 2. The various sensors include a steering angle sensor (i.e., a steering amount detecting device) 3 that detects the steering angle (i.e., the amount of steering) of the vehicle steering wheel, a vehicle speed sensor (i.e., a vehicle speed detecting device) 4 that detects the speed of the vehicle, a lateral acceleration sensor (i.e., a lateral acceleration detecting device: shortened below to a lateral G sensor) 5 that detects the acceleration in the left-right direction of the vehicle (i.e., the transverse direction of the vehicle), namely, that detects the lateral acceleration (shortened below to the lateral G), a yaw rate sensor (i.e., a yaw rate detecting device) 6 that detects the yaw rate of the vehicle, and an accelerator opening angle sensor (i.e., a required torque detecting device) 7 that detects the accelerator opening angle in the vehicle. In addition, a $\mu$ calculating section (i.e., a road surface friction estimating section) 8 calculates the coefficient of friction between the vehicle wheels and the road surface, and outputs electrical signals that correspond to the calculated coefficients of friction to the braking control section 2.

The braking control section 2 is provided with a steering angle standard yaw rate operating section 11, a steady-state standard yaw rate operating section 12, a lateral G standard yaw rate operating section (i.e., a control amount operating section) 14, a correcting section 15, a limit yaw rate deviation operating section 16, and a first braking force control operating section (i.e., a feedback control amount operating section: shortened below to an FB control amount operating section) 19.

3

The steering angle standard yaw rate operating section 11 calculates a steering angle standard yaw rate based on the steering angle of the steering wheel which is detected by the steering angle sensor 3, and on the vehicle speed which is detected by the vehicle speed sensor 4. When the driver wants the vehicle to make a genuine turn, the driver enlarges the steering angle of the steering wheel, so that the steering angle standard yaw rate is enlarged. Namely, when the steering angle standard yaw rate calculated on the basis of the steering angle is large, it is assumed that the driver who wishes the vehicle to turn has a genuine intention to steer the vehicle.

The steady-state standard yaw rate operating section 12 calculates a steady-state standard yaw rate gain Kv which corresponds to the vehicle speed by referring to a steady-state standard yaw rate gain table 21, and then multiplies the steady-state standard yaw rate gain Kv by the steering angle standard yaw rate, so as to obtain a steady-state standard yaw rate ω_high. In the steady-state standard yaw rate gain table 21 of the present embodiment, the horizontal axis shows the vehicle speed, while the vertical axis shows the steady-state standard yaw rate gain Kv. The steady-state standard yaw rate gain table 21 is set such that the greater the vehicle speed, the closer the steady-state standard yaw rate gain Kv converges to 1, while the lower the vehicle speed, the greater the steady-state standard yaw rate gain Kv becomes.

The lateral G standard yaw rate operating section 14 calculates a lateral G standard yaw rate (i.e., a first standard yaw rate) ω_low based on the lateral G detected by the lateral G sensor 5, and on the vehicle speed detected by the vehicle speed sensor 4. The lateral G standard yaw rate ω_low is the yaw rate that can be generated by the current lateral G, and is expressed, for example, by ω_low = Gy/V. Here, Gy is a lateral acceleration detection value detected by the lateral G sensor 5, and V is the vehicle speed detected by the vehicle speed sensor 4.

The correcting section 15 calculates a limit standard yaw rate (i.e. a second standard yaw rate) ω_TAR based on the steady-state standard yaw rate ω_high and the lateral G standard yaw rate ω_low. The method used to calculate the limit standard yaw rate ω_TAR in the correcting section 15 is described below in detail.

The limit yaw rate deviation operating section 16 subtracts the yaw rate detected by the yaw rate sensor 6 (i.e., the actual yaw rate) from the limit standard yaw rate ω_TAR so as to obtain a limit yaw rate deviation Δωfb.

The FB control amount operating section 19 calculates a feedback control amount (i.e., a braking force control amount: shortened below to FB control amount) based on the limit yaw rate deviation Δωfb, and outputs it to the braking device 10 as a command value.

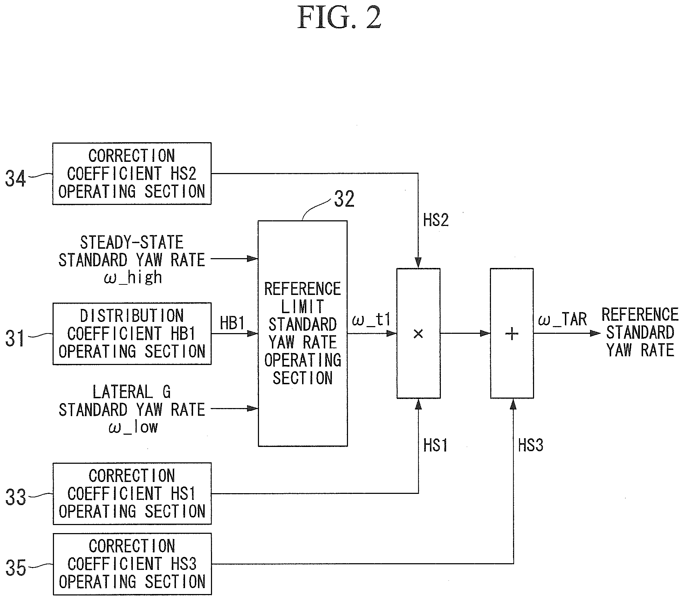

Next, a method of calculating the limit standard yaw rate ω_TAR in the correcting section 15 will be described with reference made to the drawings in FIGS. 2 to 7.

As shown in FIG. 2, the correcting section 15 is provided with a distribution coefficient HB1 operating section (i.e., a first correction regulating section) 31, a reference limit standard yaw rate operating section 32, a correction coefficient HS1 operating section (i.e., a second correction regulating section) 33, a correction coefficient HS2 operating section (i.e., a third correction regulating section) 34, and a correction coefficient HS3 operating section (i.e., a fourth correction regulating section) 35.

In the correcting section 15, a reference limit standard yaw rate ω_t1 is calculated in the reference limit standard yaw rate operating section 32 based on the distribution coefficient HB1 which was calculated by the distribution coefficient HB1 operating section 31, on the steady-state standard yaw rate ω_high, and on the lateral G standard yaw rate ω_low. Furthermore, the correction coefficient HS1 calculated by the correction coefficient HS1 operating section 33 and the correction coefficient HS2 calculated by the correction coefficient HS2 operating section 34 are multiplied by the reference limit standard yaw rate ω_t1, and the correction coefficient HS3 calculated by the correction coefficient HS3 operating section 35 is then added to the value thereby obtained. As a result, the limit standard yaw rate ω_TAR is obtained (see Formula (1) below). Note that the correction amount by which the lateral G standard yaw rate ω_low is corrected in the direction in which it increases is decided by the distribution coefficient HB1, the correction coefficient HS1, the correction coefficient HS2, and the correction coefficient HS3.

$$\omega\_TAR = \omega\_t1 \times HS1 \times HS2 + HS3 \qquad \ldots (1)$$

This limit standard yaw rate ω_TAR forms a yaw rate target value for the feedback control.

More specifically, the reference limit standard yaw rate operating section 32 corrects, in the direction of increase, the lateral G standard yaw rate ω_low, which was set as the target value in the feedback control in the conventional steering assist braking control in association with the steady-state standard yaw rate ω_high, which was calculated based on the steering angle, and thus obtains the reference limit standard yaw rate ω_t1. By doing this, it is possible to achieve both control that stabilizes the yaw moment generated in the vehicle body, and control that improves the steering responsiveness.

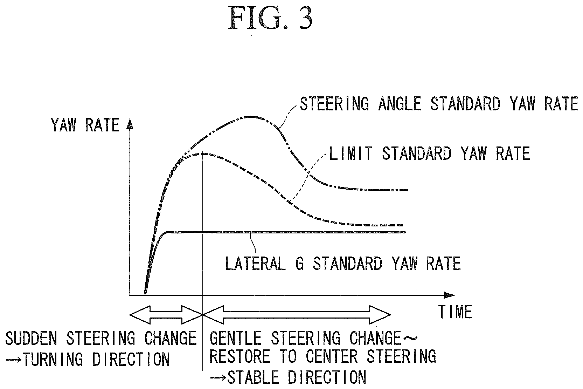

The increase correction of the lateral G standard yaw rate will now be described with reference to FIG. 3. FIG. 3 shows the temporal changes in the steering angle standard yaw rate and the lateral G standard yaw rate when the steering wheel is rotated from a state in which the vehicle is travelling in a straight line, until the steering wheel is held at a predetermined steering angle. In this manner, normally, the steering angle standard yaw rate is greater than the lateral G standard yaw rate. Therefore, in the method used to correct the lateral G standard yaw rate by increasing it, the lateral G standard yaw rate is corrected so that it approaches the steering angle standard yaw rate, and the extent to which it approaches to the steering angle standard yaw rate is adjusted in accordance with the vehicle running state. For the method used for this adjustment, the concept of the distribution coefficient of the lateral G standard yaw rate and the steering angle standard yaw rate is employed.

In the present embodiment, this concept is developed still further. For the method used to correct the lateral G standard yaw rate by increasing it, the lateral G standard yaw rate is corrected such that it approaches the steady-state standard yaw rate $\omega\_high$ which was calculated based on the steering angle standard yaw rate.

More specifically, in the present embodiment, the reference limit standard yaw rate $\omega\_t1$ is calculated from the following Formula (2) based on the distribution coefficient HB1 which is calculated by the distribution coefficient HB1 operating section 31, the lateral G standard yaw rate $\omega\_low$, and the steady-state standard yaw rate $\omega\_high$.

$$\omega\_t1 = HB1 \times \omega\_high + (1\text{-}HB1) \times \omega\_low \qquad \ldots (2)$$

Here, the distribution coefficient HB1 is a numerical value from 0 to 1. When HB1 = 0, the reference limit standard yaw rate $\omega\_t1$ corresponds to the lateral G standard yaw rate $\omega\_low$. On the other hand, when HB1 equals 1, the reference limit standard yaw rate $\omega\_t1$ corresponds to the steady-state standard yaw rate $\omega\_high$.

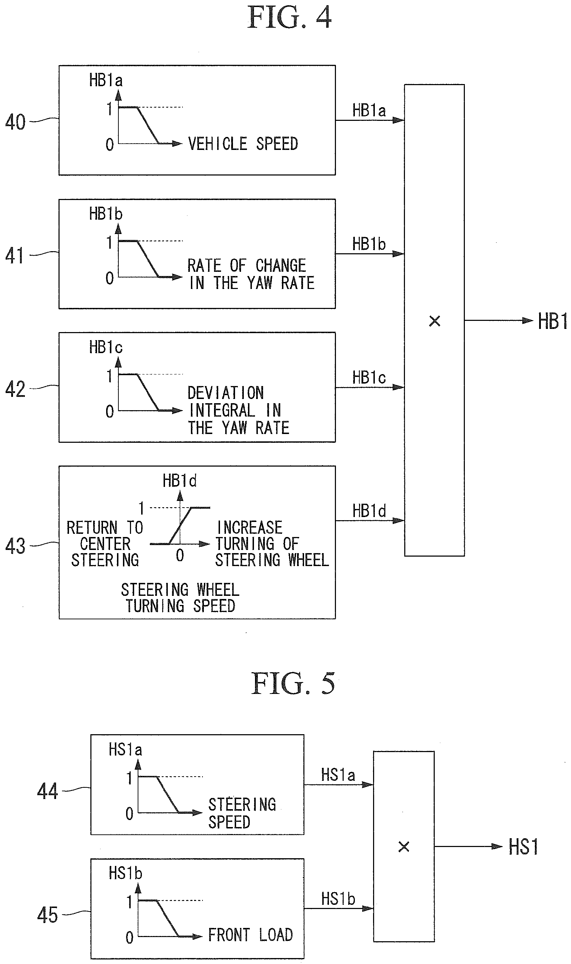

Next, the distribution coefficient HB1 calculated in the distribution coefficient HB 1 operating section 31 will be described with reference made to FIG. 4.

The distribution coefficient HB1 is calculated by multiplying together a distribution coefficient HB1a which is calculated in accordance with the vehicle speed, a distribution coefficient HB1b which is calculated in accordance with the rate of change in the yaw rate, a distribution coefficient HB1c which is calculated in accordance with the yaw rate deviation integral, and a distribution coefficient HB1d which is calculated in accordance with the steering wheel turning speed (see Formula (3) below).

$$HB1 = HB1a \times HB1b \times HB1c \times HB1d \qquad \ldots (3)$$

Each of the distribution coefficients HB1a, HB1b, HB1c, and HB1d are calculated by referring to the respective distribution coefficient tables 40, 41, 42, and 43 shown in FIG. 4. Hereinafter, the respective distribution coefficient tables 40, 41, 42, and 43 of the present embodiment will be described.

In the distribution coefficient table 40 which is used to calculate the distribution coefficient HB1a, the horizontal axis shows the vehicle speed, while the vertical axis shows the distribution coefficient HB1a. In this distribution coefficient table 40, in a low vehicle speed region, HB1a is fixed as HB1a = 1. When the vehicle speed exceeds a predetermined value, then as the vehicle speed increases, the distribution coefficient HB1a becomes gradually smaller, and in a high vehicle speed region, HB1a is fixed as HB1a = 0. As a consequence of this, when the vehicle speed is low, the limit standard yaw rate $\omega\_TAR$, which is the target value in the FB control amount operating section 19, becomes larger, so that the turning performance and the ability of the vehicle to follow a line are improved. In contrast, when the vehicle speed is high, the limit standard yaw rate $\omega\_TAR$, which is the target value in the FB control amount operating section 19, does not increase, so that the stability of the vehicle behavior is ensured.

In the distribution coefficient table 41 which is used to calculate the distribution coefficient HB1b, the horizontal axis shows the rate of change in the yaw rate, while the vertical axis shows the distribution coefficient HB1b. In this distribution coefficient table 41, in the region where the rate of change in the yaw rate is small, HB1b is fixed as HB1b = 1. When the rate of change in the yaw rate exceeds a predetermined value, then as the rate of change in the yaw rate increases, the distribution coefficient HB1b becomes gradually smaller, and in the region where the rate of change in the yaw rate is large, HB1b is fixed as HB1b = 0. Here, the rate of change in the yaw rate refers to temporal changes in the actual yaw rate which are detected by the yaw rate sensor 6, and can be calculated by creating a time derivative of the actual yaw rate. For example, when the vehicle is making a violent slalom maneuver, or when the vehicle behavior is unstable, a large rate of change in the yaw rate is evident.

At times such as this, because it is undesirable for the limit standard yaw rate $\omega\_TAR$ which is the target value in the FB control amount operating section 19 to increase, when the rate of change in the yaw rate is large, the distribution coefficient HB1b is set to a small value so that the limit standard yaw rate $\omega\_TAR$ does not increase.

In the distribution coefficient table 42 which is used to calculate the distribution coefficient HB1c, the horizontal axis shows the yaw rate deviation integral value, while the vertical axis shows the distribution coefficient HB1c. In this distribution coefficient table 42, in the region where the yaw rate deviation integral value is small, HB1c is fixed as HB1c = 1. When the yaw rate deviation integral value exceeds a predetermined value, then as the yaw rate deviation integral value increases, the distribution coefficient HB1c becomes gradually smaller, and in the region where the yaw rate deviation integral value is large, HB1c is fixed as HB1c = 0. Here, the yaw rate deviation integral value is a value obtained by accumulating the deviation between the limit standard yaw rate and the actual yaw rate detected by the yaw rate sensor 6, namely, the limit yaw rate deviation $\Delta\omega fb$ from the time when the turning of the steering wheel was first started. For example, even if the limit yaw rate deviation $\Delta\omega fb$ is small, if that state continues for a prolonged period, the yaw rate deviation integral value increases to a large value. At times such as this, there is a gradually increasing possibility, albeit one that only increases slowly, that the vehicle will spin out. Therefore, it is undesirable for the limit standard yaw rate $\omega\_TAR$, which is the target value in the FB control amount operating section 19, to increase. For this reason, when the yaw rate deviation integral value is large, the distribution coefficient HB1c is set to a small value so that the limit standard yaw rate $\omega\_TAR$ does not increase.

In the distribution coefficient table 43 which is used to calculate the distribution coefficient HB1d, the horizontal axis shows the steering wheel turning speed, while the vertical axis shows the distribution coefficient HB1d. This distribution coefficient table 43 is set such that the greater the steering wheel turning speed, the larger the distribution coefficient HB1d becomes, and when the steering wheel turning speed is positive, the distribution coefficient HB1d is larger than when the steering wheel turning speed is negative. Here, the steering wheel turning speed is a value that is decided based on the amount of change over time in the steering angle of the steering wheel and on the steering angle which are detected by the steering angle sensor 3, and can be calculated by creating a time derivative of the steering angle and then comparing this with the steering angle. The steering wheel turning speed is positive when, in a state in which the steering wheel is rotated in a direction away from a neutral position (i.e., a position in which the vehicle travels in a straight line), an amount of change over time is generated in that same direction, and also when, in a state in which the steering wheel is rotated towards the neutral position (i.e., the position in which the vehicle travels in a straight line), an amount of change over time is generated in that same direction. In contrast, the steering wheel turning speed is negative when, in a state in which the steering wheel is rotated in a direction away from a neutral position (i.e., a position in which the vehicle travels in a straight line), an amount of change over time is generated in a direction facing the neutral position, and also when, in a state in which the steering wheel is rotated in a direction in which it returns to the neutral position, an amount of change over time is generated in a direction moving away from the neutral position.

When the steering wheel turning speed is positive, because it is assumed that the driver has a genuine desire to make the vehicle make a sizable turn, the value of the distribution coefficient HB1d is increased proportionally as the steering wheel turning speed is increased (with the maximum value of HB1d fixed as HB1d = 1), so that the limit standard yaw rate $\omega\_TAR$ is increased to a large value. As a result of this, the responsiveness of the vehicle to the steering is improved. On the other hand, when the steering wheel turning speed is negative, because it is assumed that the driver is about to conclude the turning operation, the value of the distribution coefficient HB1d is decreased proportionally as the absolute value of the steering wheel turning speed is increased (with the minimum value of HB1d fixed as HB1d = 0), so that the limit standard yaw rate $\omega\_TAR$ does not increase.

As a result of this, the responsiveness of the vehicle to the steering when avoiding an object in front of it, or when making a lane change or the like is improved.

In other case, it is also possible for the distribution coefficient HB1d to be calculated based on the steering wheel turning angle (i.e., the amount of steering wheel turning) instead of the steering wheel turning speed. This is because the greater the steering wheel turning angle, the more it can be assumed that the driver has a strong intention to genuinely turn the vehicle. In this case, the steering wheel turning angle has the same definition as the steering angle.

Next, the correction coefficient HS1 which is calculated in the correction coefficient HS1 operating section (i.e., a second correction regulating section) 33 will be described with reference made to FIG. 5.

This correction coefficient HS1 is the correction coefficient employed under a supposition that the driver has loaded the front of a vehicle, and is performing an operation to turn the vehicle by turning the steering wheel.

As shown in FIG. 5, the correction coefficient HS1 is calculated by multiplying together a correction coefficient HS1a, which is calculated in accordance with the steering speed, and a correction coefficient HS1b, which is calculated in accordance with the vehicle front load (see Formula (4) below).

$$HS1 = HS1a \times HS1b \qquad\qquad \dots (4)$$

The vehicle front load refers to the amount of load movement towards the front of the vehicle, and can be estimated based, for example, on a longitudinal acceleration sensor (not shown) which detects the acceleration in the longitudinal direction of the vehicle. In this case, the longitudinal acceleration sensor can be called a load movement estimating device that estimates the amount of load movement in the longitudinal direction.

Each of the correction coefficients HS1a and HS1b are calculated by referring to the correction coefficient tables 44 and 45 shown in FIG. 5. The correction coefficient tables 44 and 45 of the present embodiment will now be described.

In the correction coefficient table 44 which is used to calculate the correction coefficient HS1a, the horizontal axis shows the steering speed, while the vertical axis shows the correction coefficient HS1a. In this correction coefficient HS1a table 44, in the region where the steering speed is low, HS1a is fixed as HS1a = 1. When the steering speed exceeds a predetermined value, then as the steering speed increases, the correction coefficient HS1a becomes gradually smaller, and in the region where the steering speed is large, HS1a is fixed as HS1a = 0.

In the correction coefficient table 45 which is used to calculate the correction coefficient HS1b, the horizontal axis shows the front load (i.e., the amount of load movement towards the front of the vehicle), while the vertical axis shows the correction coefficient HS1b. In this correction coefficient HS1b table 45, in the region where the front load is small, HS1b is fixed as HS1b = 1. When the front load exceeds a predetermined value, then as the front load increases, the correction coefficient HS1b becomes gradually smaller, and in the region where the front load is large, HS1b is fixed as HS1b = 0.

As described above, if the vehicle is in a front load state and the steering wheel is turned, then it is easy to turn the vehicle, however, as the front load increases, the vehicle behavior more easily becomes unstable. Moreover, the greater the steering speed, the easier it is for the vehicle behavior to become unstable. The correction coefficient HS1 is a correction coefficient that is intended to adjust the limit standard yaw rate $\omega\_$TAR during this type of steering.

As a result of the correction coefficient HS1 being calculated in this manner, because the correction coefficient HS1 is 1 both in the region where the steering speed is low, and in the region where the front load is small, it is possible to increase the limit standard yaw rate $\omega\_$TAR, and to improve the turning performance of the vehicle. In contrast to this, because the correction coefficient HS1 becomes smaller than 1 proportionally as the steering speed and the front load increase, the limit standard yaw rate $\omega\_$TAR can be reduced, and the stability of the vehicle behavior can be ensured.

Next, the correction coefficient HS2 which is calculated in the correction coefficient HS2 operating section (i.e., a third correction regulating section) 34 will be described.

This correction coefficient HS2 is a correction coefficient for a case in which a lane change (i.e., an operation in which, by turning the steering wheel, the direction of travel of a vehicle is immediately restored to the original direction of travel) on a road surface having a high coefficient of friction (abbreviated below to $\mu$) (abbreviated below to a high $\mu$ road) between the vehicle wheels and the road surface is hypothesized.

The correction coefficient HS2 is a gain that is formed such that, with 1 being set as the maximum value, if the following conditions are satisfied, a predetermined decrease count value is subtracted from an initial value, while if any one of the following conditions are not satisfied, a predetermined increase count value is added to the initial value so that it approaches 1. The predetermined decrease count value is subtracted in accordance with the following conditions, namely: (a) when it is determined that the coefficient of friction $\mu$ is high (or when an acceleration in the longitudinal or transverse directions corresponding to traveling on a road surface having a high coefficient of friction is detected); (b) when it is determined that there is a large steering angle; (c) when it is determined that there is a large rate of decrease in the lateral G; (d) when it is determined that there is a large rate of decrease in the yaw rate. In other case, the aforementioned conditions may be either one of, or an arbitrary combination of a plurality of (a) through (d). In particular, if the convergence of the vehicle behavior at a time of a high coefficient of friction is considered, then it is preferable for a combination of the above-described (a) as well as any one of (b) through (d) to be used.

The coefficient of friction $\mu$ is calculated by the $\mu$ calculating section 8. The rate of decrease in the lateral G is the diminution rate of the lateral G, and is calculated based on the lateral G detected by the lateral G sensor 5. The rate of decrease in the yaw rate is the diminution rate of the actual yaw rate, and is detected by the yaw rate sensor 6.

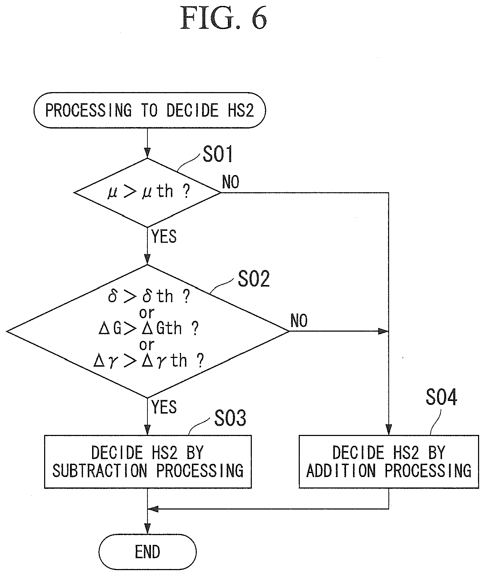

An example of the processing to decide the correction coefficient HS2 will now be described in accordance with the flowchart shown in FIG. 6.

Firstly, in step S01, a determination is made as to whether or not the coefficient of friction $\mu$ is greater than a threshold value $\mu$th.

If the result of the determination in step S01 is [YES] (i.e., if $\mu > \mu$th), the routine moves to step S02, and a determination is made as to whether or not at least one of the following conditions is satisfied: namely, whether the steering angle $\delta$ is greater than a threshold angle $\delta$th (i.e., whether $\delta > \delta$th), or whether the rate of decrease in the lateral G $\Delta$G is greater than a threshold value $\Delta$Gth (i.e., whether $\Delta G > \Delta$Gth), or whether a rate of decrease in the yaw rate $\gamma$ is greater than a threshold value $\gamma$th (i.e., whether $\gamma > \gamma$th).

The result of the determination in step S02 is [YES], the routine proceeds to step S03, and the correction coefficient HS2 is decided by subtraction processing. The processing of this routine is then temporarily ended. In this subtraction processing, a predetermined decrease count value is continually subtracted from an initial value for the correction coefficient HS2, so that the correction coefficient HS2 converges on 0.

In contrast, if the result of the determination in step S01 is [NO] (i.e., if $\mu \leqq \mu$th), and if the result of the determination in step S02 is [NO], the routine proceeds to step S04, and the correction coefficient HS2 is decided by addition processing. The processing of this routine is then temporarily ended. In this addition processing, a predetermined increase count value is continually added so that the correction coefficient HS2 converges on 1.

The initial value for the correction coefficient HS2 is a predetermined value between 0 and 1.

When a lane change has been performed on a high $\mu$ road surface, if there is a sudden decrease in the yaw rate and the lateral G, then there are cases in which a sizable yaw rate is generated by the steering in the opposite direction from the direction in which the driver wishes to proceed. At such times, if the limit standard yaw rate $\omega\_TAR$ is increased, there is a possibility that the ability of the vehicle to follow the steering will deteriorate. The correction coefficient HS2 is intended to suppress this occurrence. Namely, when the coefficient of friction $\mu$, the steering angle, the rate of decrease in the lateral GE, and the rate of decrease in the yaw rate are large, by setting the correction coefficient HS2 to a small value, the limit standard yaw rate $\omega\_TAR$ is prevented from increasing, which results in the convergence of the yaw rate after the lane change being improved.

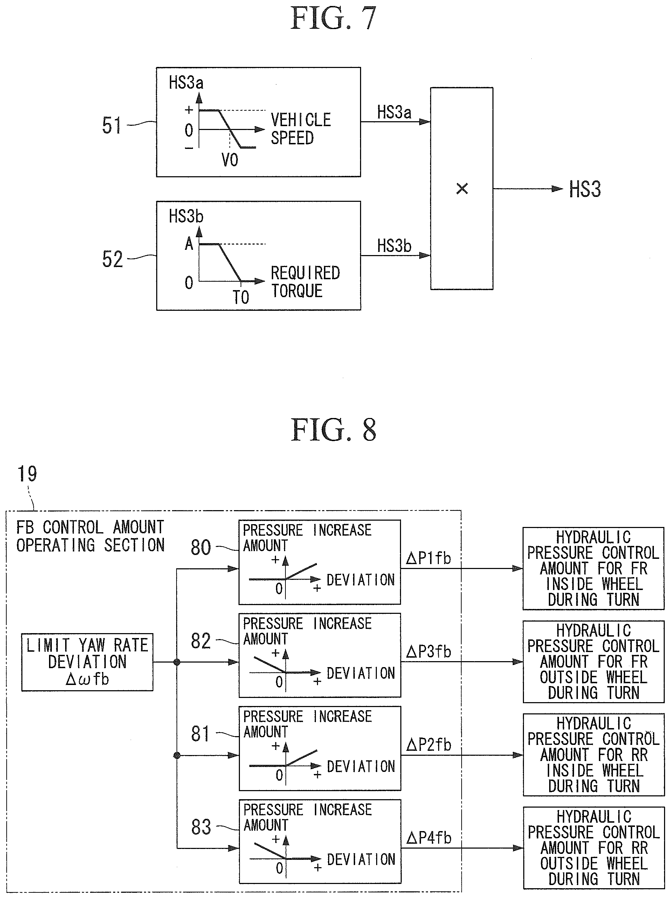

Next, the correction coefficient HS3 which is calculated in the correction coefficient HS3 operating section (i.e., a fourth correction regulating section) 35 will be described with reference made to FIG. 7.

This correction coefficient HS3 is a correction coefficient for a case in which it is hypothesized that a driver has made a tack-in. A tack-in is a phenomenon that occurs when the driver suddenly takes their foot off the accelerator pedal during a turn causing the vehicle to become front-loaded, and veer towards the inside of the turn direction. In some cases, however, this phenomenon is intentionally used by the driver in order to perform a turning operation. However, if a turning operation utilizing this tack-in is performed, then if the accelerator is released while a large amount of torque is still required from the vehicle (in other words, while the accelerator opening angle is still large), or while the vehicle speed is still too great, it is easy for the vehicle behavior to become unstable. The correction coefficient HS3 is a correction coefficient that is intended to adjust the limit standard yaw rate $\omega\_TAR$ during a tack-in.

As shown in FIG. 7, the correction coefficient HS3 is calculated by multiplying together a correction coefficient HS3a, which is calculated in accordance with the vehicle speed, and a correction coefficient HS3b, which is calculated in accordance with the amount of torque required from the vehicle (see Formula (6) below).

$$HS3 = HS3a \times HS3b \qquad\qquad \dots (6)$$

The amount of torque required from the vehicle can be calculated from the accelerator opening angle detected by the accelerator opening angle sensor 7, and the amount of required torque increases as the accelerator opening angle increases.

Each of the correction coefficients HS3a and HS3b are calculated by referring to the correction coefficient tables 51 and 52 shown in FIG. 7. The correction coefficient tables 51 and 52 of the present embodiment will now be described.

In the correction coefficient table 51 which is used to calculate the correction coefficient HS3a, the horizontal axis shows the vehicle speed, while the vertical axis shows the correction coefficient HS3a. In this correction coefficient HS3a table 51, in the region where the vehicle speed is less than a predetermined value, HS3a is a positive fixed value. When the vehicle speed exceeds the predetermined value, then as the vehicle speed increases, the correction coefficient HS3a becomes gradually smaller, and when it exceeds a predetermined speed V0, it changes to a negative value. In the region where the vehicle speed is extremely high, HS3a is a negative fixed value.

In the correction coefficient table 52 which is used to calculate the correction coefficient HS3b, the horizontal axis shows the amount of torque required from the vehicle, while the vertical axis shows the correction coefficient HS3b. In this correction coefficient HS3b table 52, in the region where the required torque is less than a predetermined value T0, HS3b is a positive value, while in the region where the required torque is greater than the predetermined value T0, the correction coefficient HS3b = 0. Here, the predetermined value T0 is an extremely small value and is set, for example, to the required torque that corresponds to when the accelerator opening angle is close to zero.

By setting the correction coefficient tables 51 and 52 in this manner, when the required torque is greater than the predetermined value T0 (namely, when it is determined that the vehicle is not in a tack-in state), then irrespective of the vehicle speed, the correction coefficient HS3 is 0, and it is possible to avoid having to correct the limit standard yaw rate $\omega\_TAR$.

Moreover, when the required torque is less than the predetermined value T0 (namely, when it is determined that the vehicle is in a tack-in state), and the vehicle speed is also less than V0, then because the correction coefficient HS3 becomes a positive value, the limit standard yaw rate $\omega\_TAR$ can be increased to a large value. In contrast, when the required torque is less than the predetermined value T0, and the vehicle speed is greater than V0, then because the correction coefficient HS3 becomes a negative value, the limit standard yaw rate $\omega\_TAR$ can be reduced to a small value. Furthermore, when the vehicle speed is less than V0, and the required torque is the same, then the correction coefficient HS3 can be increased to a large positive value proportionally as the vehicle speed lessens, so that the limit

standard yaw rate $\omega$_TAR can be increased to a large value. By employing this method, the turning performance of the vehicle during tack-in at a low or medium speed can be improved. In particular, the lower the vehicle speed, the greater the improvement in the turning performance of the vehicle during tack-in. In contrast, when the vehicle speed is greater than V0, and the required torque is the same, then the correction coefficient HS3 can be increased to a large negative value proportionally as the vehicle speed increases, so that the limit standard yaw rate $\omega$_TAR can be reduced to a small value. By employing this method, when the vehicle is speed high, it is possible to prevent an excessive yaw moment being generated and causing the vehicle to oversteer. Consequently, it is possible to prevent the vehicle behavior from becoming unstable.

Next, the calculation of the braking control amount executed by the FB control amount operating section 19 (referred to below as the FB control amount) will be described with reference made to FIG. 8.

In the FB control amount operating section 19, based on the limit yaw rate deviation $\Delta\omega$fb calculated by the limit yaw rate deviation operating section 16, an FB pressure increase amount $\Delta$P1fb for an FR inside wheel during a turn, an FB pressure increase amount $\Delta$P3fb for an outside wheel on the front wheel side during a turn (hereinafter, abbreviated to the FR outside wheel during a turn), an FB pressure increase amount $\Delta$P2fb for an RR inside wheel during a turn, and an FB pressure increase amount $\Delta$P4fb for an outside wheel on the rear wheel side during a turn (hereinafter, abbreviated to the RR outside wheel during a turn) are calculated. $\Delta$P1fb, $\Delta$P2fb, $\Delta$P3fb, and $\Delta$P4fb are first control amounts for braking control. An example is described of a case in which, for subsequent turning directions, the symbols of deviation $\Delta\omega$fb are positive, and both the standard yaw rate and the actual yaw rate are positive.

The FB pressure increase amount $\Delta$P1fb for the FR inside wheel during a turn is calculated by referring to a pressure increase amount table 80 based on the limit yaw rate deviation $\Delta\omega$fb. In the pressure increase amount table 80, the horizontal axis is the limit yaw rate deviation $\Delta\omega$fb, while the vertical axis is the FB pressure increase amount $\Delta$P1fb. In the present embodiment, when the limit yaw rate deviation $\Delta\omega$fb is less than 0, the FB pressure increase amount $\Delta$P1fb is 0, and when the limit yaw rate deviation $\Delta\omega$fb is more than 0, the FB pressure increase amount $\Delta$P1fb increases proportionally as the limit yaw rate deviation $\Delta\omega$fb increases.

The FB pressure increase amount $\Delta$P2fb for the RR inside wheel during a turn is calculated by referring to a pressure increase amount table 81 based on the limit yaw rate deviation $\Delta\omega$fb. In the pressure increase amount table 81, the horizontal axis is the limit yaw rate deviation $\Delta\omega$fb, while the vertical axis is the FB pressure increase amount $\Delta$P2fb. In the present embodiment, when the limit yaw rate deviation $\Delta\omega$fb is less than 0, the FB pressure increase amount $\Delta$P2fb is 0, and when the limit yaw rate deviation $\Delta\omega$fb is more than 0, the FB pressure increase amount $\Delta$P2fb increases proportionally as the limit yaw rate deviation $\Delta\omega$fb increases.

The FB pressure increase amount $\Delta$P3fb for the FR outside wheel during a turn is calculated by referring to a pressure increase amount table 82 based on the limit yaw rate deviation $\Delta\omega$fb. In the pressure increase amount table 82, the horizontal axis is the limit yaw rate deviation $\Delta\omega$fb, while the vertical axis is the FB pressure increase amount $\Delta$P3fb. In the present embodiment, when the limit yaw rate deviation $\Delta\omega$fb is more than 0, the FB pressure increase amount $\Delta$P3fb is 0, and when the limit yaw rate deviation $\Delta\omega$fb is less than 0, the FB pressure increase amount $\Delta$P3fb increases proportionally as the absolute value of the limit yaw rate deviation $\Delta\omega$fb increases.

The FB pressure increase amount $\Delta$P4fb for the RR outside wheel during a turn is calculated by referring to a pressure increase amount table 83 based on the limit yaw rate deviation $\Delta\omega$fb. In the pressure increase amount table 83, the horizontal axis is the limit yaw rate deviation $\Delta\omega$fb, while the vertical axis is the FB pressure increase amount $\Delta$P4fb. In the present embodiment, when the limit yaw rate deviation $\Delta\omega$fb is more than 0, the FB pressure increase amount $\Delta$P4fb is 0, and when the limit yaw rate deviation $\Delta\omega$fb is less than 0, the FB pressure increase amount $\Delta$P4fb increases proportionally as the absolute value of the limit yaw rate deviation $\Delta\omega$fb increases.

Namely, in the FB control amount operating section 19, when the limit yaw rate deviation $\Delta\omega$fb is more than 0, because the actual yaw rate is smaller than the limit standard yaw rate, the FB control amount for each wheel is set in a direction in which the yaw rate increases (in other words, in a direction in which the limit yaw rate deviation $\Delta\omega$fb is canceled out). Specifically, the FB pressure increase amount is set in a direction in which the brake hydraulic pressure on the FR inside wheel during the turn and on the RR inside wheel during the turn increases, and the FB pressure increase amount is also set such that the brake hydraulic pressure on the FR outside wheel during the turn and on the RR outside wheel during the turn does not increase.

In contrast, when the limit yaw rate deviation $\Delta\omega$fb is less than 0, because the actual yaw rate is larger than the limit standard yaw rate, the FB control amount for each wheel is set in a direction in which the yaw rate decreases (in other words, in a direction in which the limit yaw rate deviation $\Delta\omega$fb is canceled out). Specifically, the FB pressure increase amount is set in a direction in which the brake hydraulic pressure on the FR outside wheel during the turn and on the RR outside wheel during the turn increases, and the FB pressure increase amount is also set such that the brake hydraulic pressure on the FR inside wheel during the turn and on the RR inside wheel during the turn does not increase.

In addition, the FB control amount operating section 19 outputs to the braking device 10 the FB pressure increase amount $\Delta$P1fb for the FR inside wheel during a turn, the FB pressure increase amount $\Delta$P2fb for the RR inside wheel during a turn, the FB pressure increase amount $\Delta$P3fb for the FR outside wheel during a turn, and the FB pressure increase amount ΔP4fb for the RR outside wheel during a turn. The braking device 10 controls the brake pressure of each wheel in accordance with the control amounts for each wheel that are input.

According to the vehicle turning control device of the present embodiment, because the lateral G standard yaw rate ω_low is corrected by the correcting section 15 in a direction of increase, in association with the steady-state standard yaw rate ω_high which is calculated based on the steering angle, so that the limit standard yaw rate ω_TAR is calculated, it is possible to achieve both control that stabilizes the yaw moment generated in the vehicle body, and control that improves the steering responsiveness. As a result, the turning intention of a driver is reflected with an accurate response, and the steering feel is improved.

Moreover, because the lateral G standard yaw rate ω_low is corrected in a direction of increase so as to form the limit standard yaw rate ω_TAR, it is possible to increase the target value in the FB control amount operating section 19, and thereby improve the turning performance of the vehicle. As a result, it becomes possible to make a vehicle turn around a driving course, and the ability of the vehicle to follow the road (i.e., the traceability) is improved.

Furthermore, because the distribution coefficient HB1 operating section 31, the correction coefficient HS1 operating section 33, the correction coefficient HS2 operating section 34, and the correction coefficient HS3 operating section 35 are provided in the correcting section 15, the convergence and the like of the yaw rate are improved in accordance with the state of the vehicle and the state of the road surface and the like (for example, after a lane change on a high μ road surface and the like), and even if the vehicle is traveling at low speed, the ability of the vehicle to follow the steering is improved.

[Second embodiment]

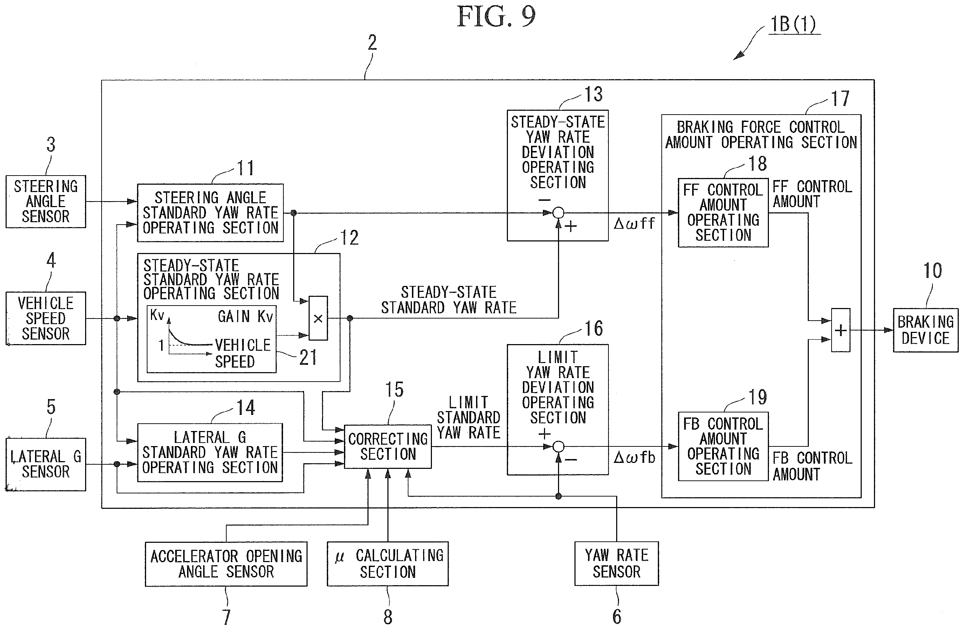

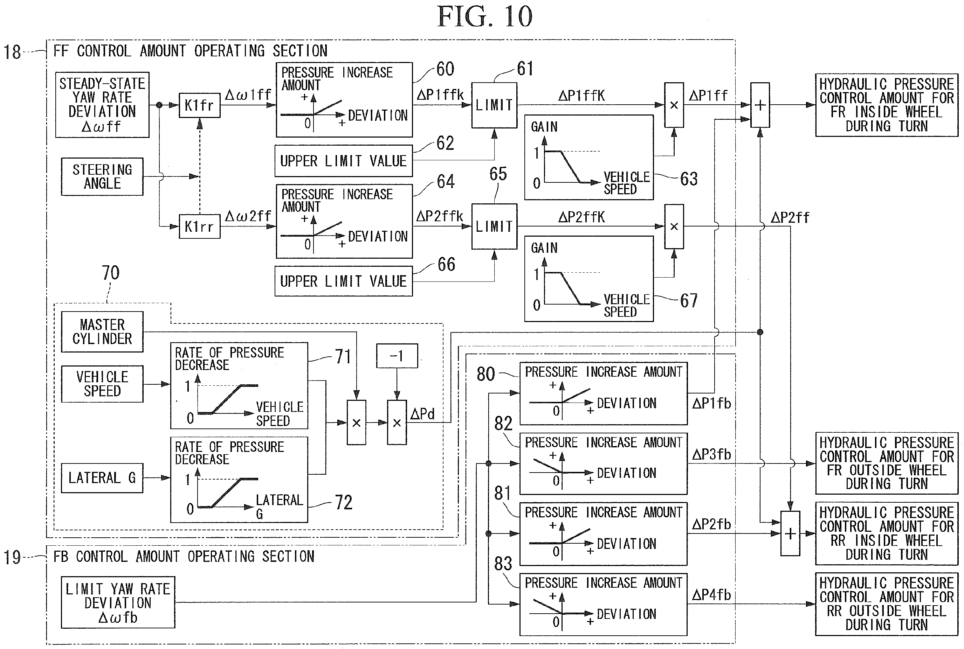

Next, a second embodiment of the vehicle turning control device according to this invention will be described with reference made to the drawings shown in FIG. 9 and FIG. 10.

FIG. 9 is a control block diagram of a vehicle turning control device 1B (1) according to the second embodiment. In the vehicle turning control device 1A of the above-described first embodiment, a control amount (i.e., an FB control amount) that cancels out any deviation between the limit standard yaw rate ω_TAR and the actual yaw rate (namely, the limit yaw rate deviation Δωfb) is determined, and the braking pressure is controlled using only this FB control amount. In contrast to this, in the vehicle turning control device 1B of the second embodiment, a feed-forward control amount (abbreviated below to 'FF control amount') is calculated based on the steering angle and the vehicle speed, and a value obtained by adding together the FB control amount and the FF control amount is taken as an overall control amount. The braking pressure for each wheel is then controlled based on this overall control amount.

The vehicle turning control device according to the second embodiment is described below, however, because the feedback control system shown in the control block diagram in FIG. 9, namely, the steering angle standard yaw rate operating section 11, the steady-state standard yaw rate operating section 12, the lateral G standard yaw rate operating section 14, the correcting section 15, the limit yaw rate deviation operating section 16, and the FB control amount operating section 19 are the same as in the first embodiment, the same symbols are used for the same type of components and any description thereof is omitted. Hereinafter, points of variance with the first embodiment will be described concentrating on the feed-forward control system.

The vehicle turning control device 1B (1) according to the second embodiment is provided, additionally to the structure of the vehicle turning control device 1A of the first embodiment, with a feed-forward control system that is formed by a steady-state yaw rate deviation operating section 13, and a feed-forward control amount operating section (i.e., a second braking force control operating section, abbreviated below to an 'FF control amount operating section') 18. A braking force control amount operating section 17 is formed by the FF control amount operating section 18 and the FB control amount operating section 19 of the first embodiment.

The steady-state yaw rate deviation operating section 13 receives inputs of steering angle standard yaw rates from which the noise has been removed by performing temporal change smoothing processing or peak hold processing or the like on the steering angle standard yaw rate calculated by the steering angle standard yaw rate operating section 11. In addition, the steady-state yaw rate deviation operating section 13 subtracts the steering angle standard yaw rate after the noise has been removed therefrom from the steady-state standard yaw rate ω_high, so as to obtain a steady-state yaw rate deviation Δωff.

The braking force control amount operating section 17 calculates a feed-forward control amount based on the steady-state yaw rate deviation Δωff in the FF control amount operating section 18, and calculates a feedback control amount (i.e., an FB control amount) based on the limit yaw rate deviation Δωfb in the FB control amount operating section 19, and then adds together the FF control amount and the FB control amount, so as to obtain an overall control amount. This overall control amount is then output as a command value to the braking device 10.

Next, the braking control amount operation which is executed by the braking force control amount operating section 17 will be described with reference made to FIG. 10.

The calculation of the FF control amount in the FF control amount operating section 18 will now be described.

Firstly, based on the steering angle which has been detected by the steering angle sensor 3, a pressure increase distribution is decided for the front inside wheel during a turn (abbreviated below to FR inside wheel during a turn) and a rear inside wheel during a turn (abbreviated below to RR inside wheel during a turn). Next, based on this pressure increase distribution, a pressure increase coefficient K1fr for the FR inside wheel during a turn and a pressure increase coefficient K1rr for the RR inside wheel during a turn are calculated. Here, it is possible for the settings to be made such that, if a large load movement is generated by the steering, the pressure increase coefficient K1fr for the FR inside wheel during the turn increases in accordance with the steering angle.

The calculation of the FF pressure increase amount ΔP1ff for the FR inside wheel during the turn and the calculation of the FF pressure increase amount ΔP2ff for the RR inside wheel during the turn are executed in parallel based on the pressure increase coefficient K1fr for the FR inside wheel during the turn and the pressure increase coefficient K1rr for the RR inside wheel during the turn. The ΔP1ff and the ΔP2ff are second braking force control amounts.

Firstly, the FF pressure increase amount ΔP1ff for the FR inside wheel during the turn will be described. The pressure increase coefficient K1fr is multiplied by the steady-state yaw rate deviation Δωff which was calculated by the steady-state yaw rate deviation operating section 13, so that a steady-state yaw rate deviation Δω1ff for the FR inside wheel during a turn is obtained.

Next, a brake hydraulic pressure increase amount ΔP1ffk for the FR inside wheel during the turn is calculated in accordance with the steady-state yaw rate deviation Δω1ff for the FR inside wheel during the turn by referring to a first pressure increase table 60. In the first pressure increase table 60, the horizontal axis is the steady-state yaw rate deviation Δω1ff, while the vertical axis is the brake hydraulic pressure increase amount ΔP1ffk. In the present embodiment, when the steady-state yaw rate deviation Δω1ff for the FR inside wheel during the turn is less than 0, the brake hydraulic pressure increase amount ΔP1ffk is 0, while when the steady-state yaw rate deviation Δω1ff for the FR inside wheel during the turn is more than 0, the brake hydraulic pressure increase amount ΔP1ffk increases proportionally as the steady-state yaw rate deviation Δω1ff increases.

Next, in a first limit processing section 61, limit processing is performed such that the brake hydraulic pressure increase amount ΔP1ffk for the FR inside wheel during the turn does not exceed an upper limit value. The upper limit value is an arbitrary value calculated by a first upper limit value calculating section 62, and by making the settings such that this value is not exceeded, any sudden variations in the brake hydraulic pressure increase amount ΔP1ffk are restricted.

Next, a gain that corresponds to the vehicle speed is multiplied by the brake hydraulic pressure increase amount ΔP1ffk for the FR inside wheel during the turn that has undergone the limit processing, resulting in an FF pressure increase amount ΔP1ff for the FR inside wheel during the turn being obtained. The gain that corresponds to the vehicle speed is calculated based on a first gain table 63. In this first gain table 63, the horizontal axis shows the vehicle speed, while the vertical axis shows the gain. In the region where the vehicle speed is low, the gain is fixed so as to = 1. When the vehicle speed exceeds a predetermined value, then as the vehicle speed increases, the gain becomes gradually smaller, and in a high vehicle speed region, the gain is fixed so as to = 0.

As a result of multiplying a gain that corresponds to the vehicle speed by the brake hydraulic pressure increase amount ΔP1ffk for the FR inside wheel during the turn, when the vehicle speed is high, the FF pressure increase amount ΔP1ff for the FR inside wheel during the turn becomes 0. In other words, when the vehicle is moving at high speed, the FF pressure increase amount ΔP1ff for the FR inside wheel during the turn is disabled. By doing this, it is possible to prevent the vehicle behavior becoming unstable because of turning assist braking at high vehicle speeds. In the present embodiment, the gain table 63 forms a disabled structure. In other case, instead of multiplying a gain that corresponds to the vehicle speed, it is also possible to supply an arbitrary limit value which decreases as the vehicle speed increases, and to apply settings that prevent ΔP1ff from exceeding this limit value.

The calculation of the FF pressure increase amount ΔP2ff for the RR inside wheel during a turn is the same as the calculation of the FF pressure increase amount ΔPfr1 for the FR inside wheel during a turn, therefore, the description thereof will be simplified.

The pressure increase coefficient K1rr for the RR inside wheel during a turn is multiplied by the steady-state yaw rate deviation Δωff which was calculated by the steady-state yaw rate deviation operating section 13, so that a steady-state yaw rate deviation Δω2ff for the RR inside wheel during a turn is obtained.

Next, a brake hydraulic pressure increase amount ΔP2ffk for the RR inside wheel during the turn is calculated in accordance with the steady-state yaw rate deviation Δω2ff for the RR inside wheel during the turn by referring to a second pressure increase table 64. The second pressure increase table 64 is the same as the first pressure increase table 60, therefore, no description thereof is provided here.

Next, in a second limit processing section 65, limit processing is performed such that the brake hydraulic pressure increase amount ΔP2ffk for the RR inside wheel during the turn does not exceed an upper limit value. The upper limit value is calculated by a second upper limit value calculating section 66. The second upper limit value calculating section 66 is the same as the first upper limit value calculating section 62.

Next, a gain that is calculated using a second gain table 67 is multiplied by the brake hydraulic pressure increase amount ΔP2ffk for the RR inside wheel during the turn that has undergone the limit processing, resulting an FF pressure increase amount ΔP2ff for the RR inside wheel during the turn being obtained. The second gain table 67 is the same as the first gain table 63, therefore, no description thereof will be provided here. In the present embodiment, the second gain table 67 forms a disabled structure.

Moreover, the FF control amount operating section 18 is provided with an inside wheel pressure decrease amount calculating section 70. The purpose of the inside wheel pressure decrease amount calculating section 70 is to place preset limits on the brake hydraulic pressure of the inside wheels during a turn under the assumption that the vehicle behavior will become unstable if braking is applied at high speed and under high lateral G conditions.

In the inside wheel pressure decrease amount calculating section 70, a rate of pressure decrease that corresponds to the vehicle speed is calculated by referring to a first pressure decrease rate table 71, and a rate of pressure decrease that corresponds to the lateral G is calculated by referring to a second pressure decrease rate table 72. These pressure decrease rates are then multiplied together to give an overall rate of pressure decrease.

In the first pressure decrease rate table 71, the horizontal axis is the vehicle speed, while the vertical axis is the rate of pressure decrease. In the region where the vehicle speed is low, the rate of pressure decrease is fixed so as to = 0. When the vehicle speed exceeds a predetermined value, then as the vehicle speed increases, the rate of pressure decrease becomes gradually larger, and in a high vehicle speed region, the rate of pressure decrease is fixed so as to = 1.

In the second pressure decrease rate table 72, the horizontal axis is the lateral G, while the vertical axis is the rate of pressure decrease. In the region where the lateral G is small, the rate of pressure decrease is fixed so as to = 0. When the lateral G exceeds a predetermined value, then as the lateral G increases, the rate of pressure decrease becomes gradually larger, and in a high lateral G region, the rate of pressure decrease is fixed so as to = 1.

By employing this type of structure, the overall rate of pressure decrease is set to a value between 0 and 1 in accordance with the vehicle speed and the lateral G while the vehicle is traveling.

By then multiplying the master cylinder pressure in the braking device 10 by the overall rate of pressure decrease which has been determined in this manner, and by then further multiplying the result thereby obtained by negative 1, an inside wheel pressure decrease rate ΔPd is obtained.

The calculation of the FB control amount performed in the FB control amount operating section 19 is the same as in the first embodiment, therefore, no description thereof will be given here.

In the braking force control amount operating section 17, a value obtained by adding together the FF pressure increase amount ΔP1ff of the FR inside wheel during a turn, the FB pressure increase amount ΔP1fb of the FR inside wheel during a turn, and the inside wheel pressure decrease rate ΔPd is taken as the overall control amount for the FR inside wheel during a turn. In addition, a value obtained by adding together the FF pressure increase amount ΔP2ff of the RR inside wheel during a turn, the FB pressure increase amount ΔP2fb of the RR inside wheel during a turn, and the inside wheel pressure decrease rate ΔPd is taken as the overall control amount for the RR inside wheel during a turn. Moreover, the FB pressure increase amount ΔP3fb for the FR outside wheel during a turn is taken as the overall control amount for the FR outside wheel during a turn, and the FB pressure increase amount ΔP4fb for the RR outside wheel during a turn is taken as the overall control amount for the RR outside wheel during a turn. These four control amounts are output to the braking device 10.

The braking device 10 controls the braking pressure of each wheel in accordance with the control amounts for the respective wheels that have been input.

According to the vehicle turning control device of the present embodiment, in the same way as in the first embodiment, the lateral G standard yaw rate ω_low is corrected by the correcting section 15 in a direction in which its value increases, in association with the steady-state standard yaw rate ω_high which is calculated based on the steering angle, so that the limit standard yaw rate ω_TAR is obtained. Because of this, it is possible to achieve both control that stabilizes the yaw moment generated in the vehicle body, and control that improves the steering response. As a result, the turning intention of a driver is reflected with an accurate response, and the steering feel is improved.

Moreover, because the lateral G standard yaw rate ω_low is corrected in a direction of increase so as to form the limit standard yaw rate ω_TAR, it is possible to increase the target value in the FB control amount operating section 19, and thereby improve the turning performance of the vehicle. As a result, it becomes possible to make a vehicle turn around the course being driven, and the ability of the vehicle to follow the road (i.e., the traceability) is improved.

Furthermore, because the distribution coefficient HB1 operating section 31, the correction coefficient HS1 operating section 33, the correction coefficient HS2 operating section 34, and the correction coefficient HS3 operating section 35 are provided in the correcting section 15, the convergence of the yaw rate is improved in accordance with the state of the vehicle and the state of the road surface and the like (for example, after a lane change on a high μ road surface and the like), and even if the vehicle is traveling at low speed, the ability of the vehicle to follow the steering is improved.

Moreover, according to the vehicle turning control device of the present embodiment, because the braking pressure is controlled based on an overall control amount that is obtained by adding an FF control amount, which is calculated based on the steering input, to an FB control amount, which is calculated based on the vehicle behavior, it is possible to improve the steering responsiveness and followability, while maintaining the stability of the vehicle behavior. For example, as in a steady-state circular turn or the like, in the step of holding the steering after having made the initial steering input, variations in the control amount are suppressed, and the ability of the vehicle to follow the road is improved.

[Third embodiment]

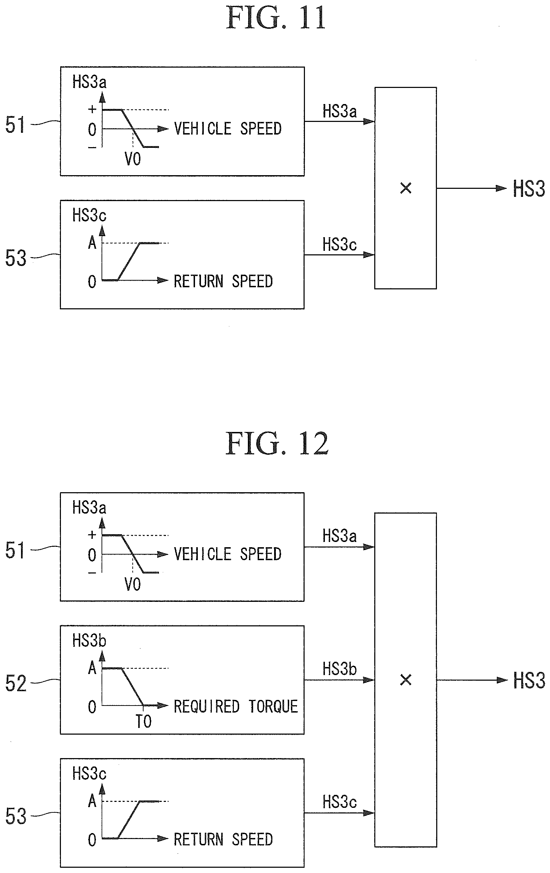

Next, a third embodiment of the vehicle turning control device according to this invention will be described with reference made to the drawings shown in FIG. 11 and FIG. 12. The point of variance between the present embodiment and the above-described first embodiment is that, in the first embodiment, whether or not the vehicle is in a tack-in state is determined based on the required torque, while in the third embodiment, whether or not the vehicle is in a tack-in state is determined based on the return speed of the accelerator pedal or the accelerator opening angle (hereinafter, this is abbreviated to 'return speed'), or based on both the required torque and the return speed. Namely, the determination method of the present embodiment can be applied to both the above-described first embodiment and the second embodiment. This determination method will now be described in detail.

When determining whether or not a vehicle is in a tack-in state based on the return speed, as shown in FIG. 11, the correction coefficient HS3 is calculated by multiplying the correction coefficient HS3a, which is calculated in accordance with the vehicle speed, and a correction coefficient HS3c, which is calculated in accordance with the return speed (HS3 = HS3a x HS3c).

The correction coefficient HS3c is calculated by referring to a correction coefficient table 53 shown in FIG. 11. In the connection coefficient table 53, the horizontal axis shows the return speed, while the vertical axis shows the correction coefficient HS3c. In this correction coefficient HS3c table 53, in the region where the return speed is less than a predetermined value, the correction coefficient HS3c is fixed as HS3c = 0, while when the return speed exceeds the predetermined value, then as the return speed increases, the correction coefficient HS3c becomes gradually larger, and converges on a maximum value A so as to finally become a fixed value. Here, the predetermined value is set to a return speed that forms a threshold value for determining whether or not the vehicle is performing a tack-in operation.

By employing this type of method, when the speed at which the accelerator pedal or the accelerator opening angle is returned is slower than the predetermined value, the vehicle is determined not to be in a tack-in state, and the correction coefficient HS3c is set to 0. As a result, the correction of the limit standard yaw rate $\omega\_TAR$ using the correction coefficient HS3 is not performed. In contrast, when the speed at which the accelerator pedal or the accelerator opening angle is returned is faster than the predetermined value, the vehicle is determined to be in a tack-in state, and a correction coefficient HS3c that corresponds to the vehicle speed is obtained, and the limit standard yaw rate $\omega\_TAR$ is corrected using the correction coefficient HS3.

When a determination as to whether or not the vehicle is in a tack-in state is made based on both the required torque and the return speed, as shown in FIG. 12, the correction coefficient HS3a, which is calculated in accordance with the vehicle speed, the correction coefficient HS3b, which is calculated in accordance with the torque required by the vehicle, and the correction coefficient HS3c, which is calculated in accordance with the return speed, are multiplied by each other, so that the correction coefficient HS3 is obtained (HS3 = HS3a $\times$ HS3b $\times$ HS3c). By employing this type of method, the accuracy of the determination as to whether or not the vehicle is in a tack-in state is improved. As a result, it is possible to prevent the limit standard yaw rate $\omega\_TAR$ undergoing adjustment processing based on the correction coefficient HS3 when the vehicle is not in a tack-in state, and unnecessary control intervention from the correction coefficient HS3 can be suppressed.

In this manner, in both cases when a determination as to whether or not the vehicle is in a tack-in state is made based on the return speed of the accelerator pedal or the accelerator opening angle, and cases when a determination as to whether or not the vehicle is in a tack-in state is made based on both the required torque and the return speed, it is possible to calculate the correction coefficient HS3, and obtain the same type of effects as those obtained in the first embodiment or the second embodiment.

[Fourth embodiment]

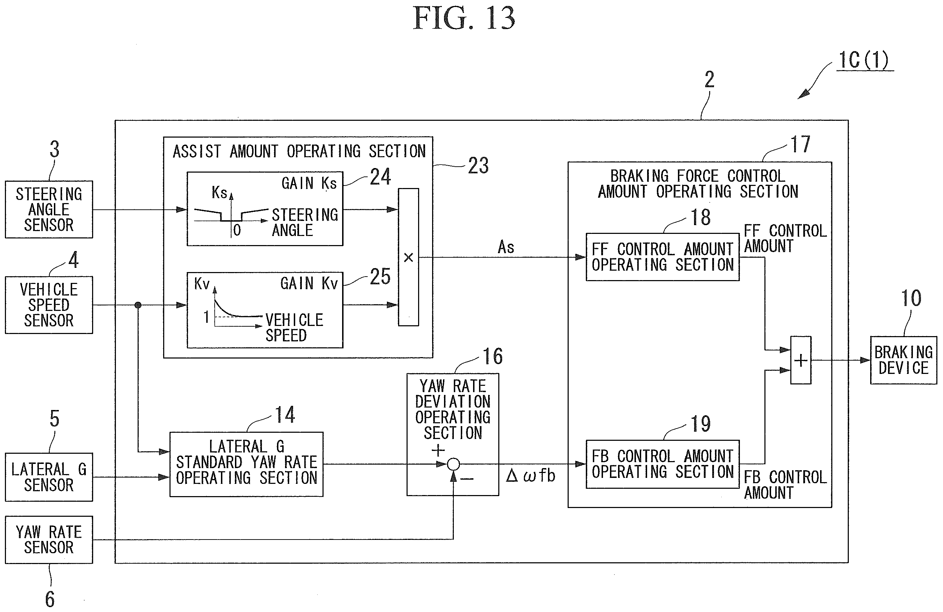

A fourth embodiment of the vehicle turning control device of this invention will now be described with reference made to FIGS. 13 to 15B.

FIG. 13 is a control block diagram of a vehicle turning control device according to the fourth embodiment.

A vehicle turning control device 1C (1) of the present embodiment is provided with a braking control section 2, and a braking device (i.e., a braking control device) 10.

The braking control section 2 decides the amounts of braking force control to be applied to the front and rear, left and right wheels of a vehicle in accordance with the running state of the vehicle. The braking device 10 controls the braking force of each wheel based on the amounts of braking force control for each wheel decided by the braking control section 2.

Detection signals that correspond to detection values obtained from a variety of sensors are input into the braking control section 2. The variety of sensors include a steering angle sensor (i.e., a steering amount detecting device) 3 that detects the steering angle (i.e., the amount of steering) of the vehicle steering wheel, a vehicle speed sensor (i.e., a vehicle speed detecting device) 4 that detects the speed of the vehicle, a lateral acceleration sensor (i.e., a lateral acceleration detecting device: shortened below to a lateral G sensor) 5 that detects the acceleration in the left-right direction of the vehicle (i.e., the transverse direction of the vehicle), namely, that detects the lateral acceleration (shortened below to the lateral G), and a yaw rate sensor (i.e., a yaw rate detecting device) 6 that detects the yaw rate of the vehicle.

The braking control section 2 is provided with an assist amount operating section (i.e., an assist amount setting device) 23, a lateral G standard yaw rate operating section (i.e., a control amount operating section) 14, a yaw rate deviation operating section 16, and a braking force control amount operating section 17. The braking force control amount operating section 17 is provided with a second braking force control operating section (i.e., a feed-forward control amount operating section: shortened below to an FF control amount operating section) 18, and a first braking force control operating section (i.e., a feedback control amount operating section: shortened below to an FB control amount operating section) 19.

The assist amount operating section 23 calculates an amount of assist As that is supplied by the brakes in order to assist the turning of the vehicle (i.e., a turning assist amount) based on the steering angle detected by the steering angle sensor 3, and on the vehicle speed detected by the vehicle speed sensor 4. More specifically, the assist amount operating section 23 calculates a gain Ks that corresponds to the steering angle by referring to a steering angle gain table 24, and also calculates a gain Kv that corresponds to the vehicle speed by referring to a vehicle speed gain table 25, and by then setting the product obtained by multiplying these gains Ks and Kv together as the assist amount As (i.e., As = Ks $\times$ Kv).

In the steering angle gain table 24 of the present embodiment, the horizontal axis shows the steering angle, while the vertical axis shows the steering angle gain Ks. The steering angle is a positive steering angle when the steering wheel is rotated clockwise from a neutral position (i.e., a position in which the vehicle travels in a straight line), and is a negative steering angle when the steering wheel is rotated anticlockwise from a neutral position. In this steering angle gain table 24, in the region where an absolute value of the steering angle is less than a predetermined value, the steering angle gain Ks is fixed as Ks = 0. When the absolute value of the steering angle reaches the predetermined value, the steering angle gain Ks abruptly increases to a positive fixed value, and when the absolute value of the steering angle exceeds the predetermined value, then as the absolute value of the steering angle becomes larger, the steering angle gain Ks is set so as to become gradually greater.

On the other hand, in the vehicle speed gain table 25 of the present embodiment, the horizontal axis shows the vehicle speed, while the vertical axis shows the vehicle speed gain Kv. As the vehicle speed increases, the vehicle speed gain Kv becomes smaller and converges on 1. The vehicle speed gain Kv is set so as to become proportionally larger as the vehicle speed decreases.

Because the steering angle gain table 24 and the vehicle speed gain table 25 are set in this manner, when an absolute value of the steering angle is less than a predetermined value, then irrespective of the size of the vehicle speed, the assist amount As is 0. In contrast, when the absolute value of the steering angle exceeds the predetermined value, then as the absolute value of the steering angle increases, the assist amount As increases. In addition, as the vehicle speed decreases, the assist amount As increases, and as the vehicle speed increases, the assist amount As decreases.

The lateral G standard yaw rate operating section 14 calculates a lateral G standard yaw rate ω_low based on the lateral G detected by the lateral G sensor 5, and on the vehicle speed detected by the vehicle speed sensor 4. The lateral G standard yaw rate ω_low is the yaw rate than can be generated by the current lateral G, and is expressed, for example, by ω_low = Gy/V. Here, Gy is a lateral acceleration detection value detected by the lateral G sensor 5, and V is the vehicle speed detected by the vehicle speed sensor 4.

The yaw rate deviation operating section 16 subtracts the yaw rate detected by the yaw rate sensor 6 (i.e., the actual yaw rate) from the lateral G standard yaw rate ω_low so as to obtain a yaw rate deviation Δωfb.

The braking force control amount operating section 17 calculates a feed-forward control amount (abbreviated below to 'FF control amount') based on the assist amount As in the FF control amount operating section 18, and calculates a feedback control amount (abbreviated below to 'FB control amount') based on the yaw rate deviation Δωfb in the FB control amount operating section 19, and then adds together the FF control amount and the FB control amount, so as to obtain an overall control amount for each wheel. The value obtained by this addition is then output as a command value to the braking device 10. In the present embodiment, the braking force control amount operating section 17 forms the braking force control amount operating section.

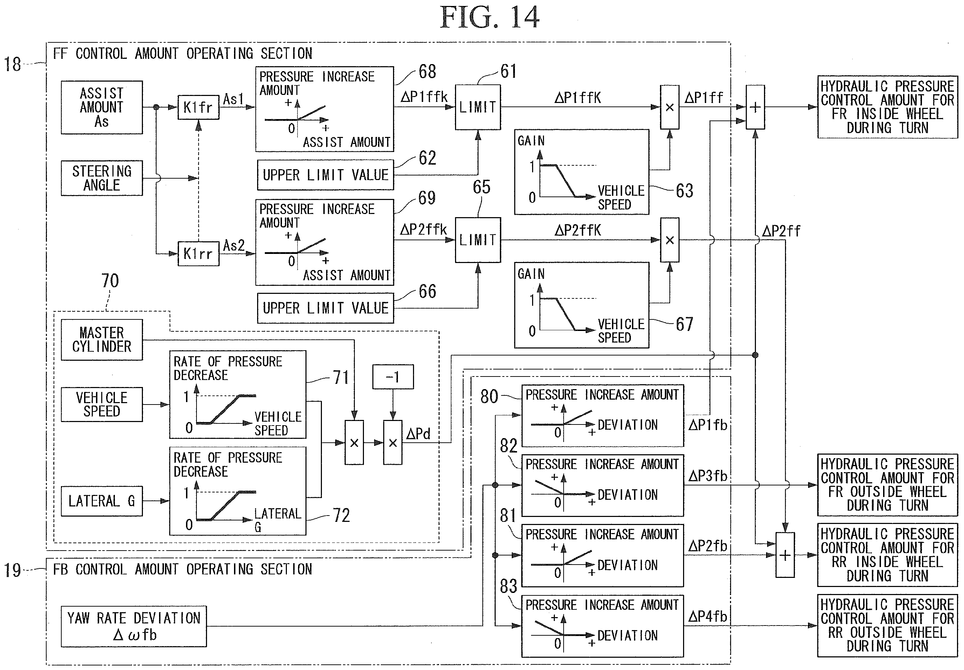

Next, the braking control amount operation which is executed by the braking force control amount operating section 17 will be described with reference made to FIG. 14.

The calculation of the FF control amount in the FF control amount operating section 18 will now be described.

Firstly, based on the steering angle of the steering wheel which has been detected by the steering angle sensor 3, a pressure increase distribution is decided for the front inside wheel of a vehicle during a turn (abbreviated below to FR inside wheel during a turn) and a rear inside wheel during a turn (abbreviated below to RR inside wheel during a turn). Next, based on this pressure increase distribution, a pressure increase coefficient K1fr for the FR inside wheel during a turn and a pressure increase coefficient K1rr for the RR inside wheel during a turn are calculated. Here, it is possible for the settings to be made such that, if a large load movement is generated by the steering, the pressure increase coefficient K1fr for the FR inside wheel during the turn increases in accordance with the steering angle.

The calculation of the FF pressure increase amount ΔP1ff for the FR inside wheel during the turn and the calculation of the FF pressure increase amount ΔP2ff for the RR inside wheel during the turn are executed in parallel based on the pressure increase coefficient K1fr for the FR inside wheel during the turn and the pressure increase coefficient K1rr for the RR inside wheel during the turn.

Firstly, the FF pressure increase amount ΔP1ff for the FR inside wheel during the turn will be described. The pressure increase coefficient K1fr is multiplied by the assist amount As which was calculated by the assist amount operating section 23, so that an assist amount As1 for the FR inside wheel during a turn is obtained.

Next, a brake hydraulic pressure increase amount ΔP1ffk for the FR inside wheel during the turn is calculated in accordance with the assist amount As1 for the FR inside wheel during the turn by referring to a first pressure increase table 68. In the first pressure increase table 68, the horizontal axis is the assist amount As1, while the vertical axis is the brake hydraulic pressure increase amount ΔP1ffk.

In the present embodiment, when the assist amount As1 for the FR inside wheel during the turn is less than 0, the brake hydraulic pressure increase amount ΔP1ffk is 0. In contrast, when the assist amount AFAs1 for the FR inside wheel during the turn is more than 0, then as the assist amount As1 increases, the brake hydraulic pressure increase amount ΔP1ffk increases proportionally.

Next, in the first limit processing section 61, limit processing is performed such that the brake hydraulic pressure increase amount ΔP1ffk for the FR inside wheel during the turn does not exceed an upper limit value. The upper limit value is an arbitrary value calculated by a first upper limit value calculating section 62, and by creating settings that do not allow this value to be exceeded, any sudden variations in the brake hydraulic pressure increase amount ΔP1ffk are restricted.

Next, a gain that corresponds to the vehicle speed is multiplied by the brake hydraulic pressure increase amount ΔP1ffk for the FR inside wheel during the turn that has undergone the limit processing, resulting in an FF pressure increase amount ΔP1ff for the FR inside wheel during the turn being obtained. The gain that corresponds to the vehicle speed is calculated based on a first gain table 63. In this first gain table 63, the horizontal axis is the vehicle speed, while the vertical axis is the gain. In the region where the vehicle speed is low, the gain is fixed so as to = 1. When the vehicle speed exceeds a predetermined value, then as the vehicle speed increases, the gain becomes gradually smaller, and in a high vehicle speed region, the gain is fixed so as to = 0.

As a result of multiplying a gain that corresponds to the vehicle speed, when the vehicle speed is high, the FF pressure increase amount ΔP1ff for the FR inside wheel during the turn becomes 0. In other words, when the vehicle is moving at high speed, the FF pressure increase amount ΔP1ff for the FR inside wheel during the turn is disabled. By doing this, it is possible to prevent the vehicle behavior becoming unstable due to turning assist braking at high vehicle speeds. In the present embodiment, the first gain table 63 forms a disabled structure. In other case, instead of multiplying a gain that corresponds to the vehicle speed, it is also possible to supply an arbitrary limit value which decreases as the vehicle speed increases, and to apply settings that prevent ΔP1ff from exceeding this limit value.

The calculation of the FF pressure increase amount ΔP2ff for the RR inside wheel during a turn is the same as the calculation of the FF pressure increase amount ΔPfr1 for the FR inside wheel during a turn, therefore, the description thereof is simplified.

The pressure increase coefficient K1rr for the RR inside wheel during a turn is multiplied by the assist amount As which was calculated by the assist amount operating section 23, so that an assist amount As2 for the RR inside wheel during a turn is obtained.

Next, a brake hydraulic pressure increase amount ΔP2ffk for the RR inside wheel during the turn is calculated in accordance with the assist amount As2 for the RR inside wheel during the turn by referring to a second pressure increase table 69. The second pressure increase table 69 is the same as the first pressure increase table 68, therefore, no description thereof is provided here.

Next, in the second limit processing section 65, limit processing is performed such that the brake hydraulic pressure increase amount ΔP2ffk for the RR inside wheel during the turn does not exceed an upper limit value. The upper limit value is calculated by the second upper limit value calculating section 66. The second upper limit value calculating section 66 is the same as the first upper limit value calculating section 62.

Next, a gain that is calculated using the second gain table 67 is multiplied by the brake hydraulic pressure increase amount ΔP2ffk for the RR inside wheel during the turn that has undergone the limit processing, resulting an FF pressure increase amount ΔP2ff for the RR inside wheel during the turn being obtained. The second gain table 67 is the same as the first gain table 63, therefore, no description thereof will be provided here. In the present embodiment, the second gain table 67 forms a disabled structure.

Moreover, the FF control amount operating section 18 is provided with an inside wheel pressure decrease amount calculating section 70. The purpose of the inside wheel pressure decrease amount calculating section 70 is to place preset limits on the brake hydraulic pressure of the inside wheels during a turn under the assumption that the vehicle behavior will become unstable if braking is applied when the vehicle is travelling at high speed and when a high lateral G is acting on the vehicle.

In the inside wheel pressure decrease amount calculating section 70, a rate of pressure decrease that corresponds to the vehicle speed is calculated by referring to the first pressure decrease rate table 71, and a rate of pressure decrease that corresponds to the lateral G is calculated by referring to the second pressure decrease rate table 72. These pressure decrease rates are then multiplied together to give an overall rate of pressure decrease.

In the first pressure decrease rate table 71, the horizontal axis is the vehicle speed, while the vertical axis is the rate of pressure decrease. In the region where the vehicle speed is low, the rate of pressure decrease is fixed so as to = 0. When the vehicle speed exceeds a predetermined value, then as the vehicle speed increases, the rate of pressure decrease becomes gradually larger, and in a high vehicle speed region, the rate of pressure decrease is fixed so as to = 1.

In the second pressure decrease rate table 72, the horizontal axis is the lateral G, while the vertical axis is the rate of pressure decrease. In the region where the lateral G is small, the rate of pressure decrease is fixed so as to = 0. When the lateral G exceeds a predetermined value, then as the lateral G increases, the rate of pressure decrease becomes gradually larger, and in a high lateral G region, the rate of pressure decrease is fixed so as to = 1.

By employing this type of structure, the overall rate of pressure decrease is set to a value between 0 and 1 in accordance with the vehicle speed and the lateral G while the vehicle is running.

By then multiplying the master cylinder pressure in the braking device 10 by the overall rate of pressure decrease which has been set in this manner, and by then further multiplying the result thereby obtained by negative 1, an inside wheel pressure decrease rate $\Delta Pd$ is obtained.

Next, the calculation of the FB control amount performed in the FB control amount operating section will be described.

In the FB control amount operating section 19, based on the yaw rate deviation $\Delta \omega fb$ calculated by the yaw rate deviation operating section 16, an FB pressure increase amount $\Delta P1fb$ for an FR inside wheel during a turn, an FB pressure increase amount $\Delta P3fb$ for an outside wheel on the front wheel side during a turn (hereinafter, abbreviated to the FR outside wheel during a turn), an FB pressure increase amount $\Delta P2fb$ for an RR inside wheel during a turn, and an FB pressure increase amount $\Delta P4fb$ for an outside wheel on the rear wheel side during a turn (hereinafter, abbreviated to the RR outside wheel during a turn) are obtained. An example is described of a case in which, for subsequent turning directions, the symbol of the deviation $\Delta \omega fb$ is positive, and both the standard yaw rate and the actual yaw rate are positive.

The FB pressure increase amount $\Delta P1fb$ for the FR inside wheel during a turn is calculated by referring to the first pressure increase amount table 80 based on the yaw rate deviation $\Delta \omega fb$. In the first pressure increase amount table 80, the horizontal axis is the yaw rate deviation $\Delta \omega fb$, while the vertical axis is the FB pressure increase amount $\Delta P1fb$. In the present embodiment, when the yaw rate deviation $\Delta \omega fb$ is less than 0, the FB pressure increase amount $\Delta P1fb$ is 0, and when the yaw rate deviation $\Delta \omega fb$ is more than 0, the FB pressure increase amount $\Delta P1fb$ increases proportionally as the yaw rate deviation $\Delta \omega fb$ increases.

The FB pressure increase amount $\Delta P2fb$ for the RR inside wheel during a turn is calculated by referring to a second pressure increase amount table 81 based on the yaw rate deviation $\Delta \omega fb$. In the second pressure increase amount table 81, the horizontal axis is the yaw rate deviation $\Delta \omega fb$, while the vertical axis is the FB pressure increase amount $\Delta P2fb$. In the present embodiment, when the yaw rate deviation $\Delta \omega fb$ is less than 0, the FB pressure increase amount $\Delta P2fb$ is 0, and when the yaw rate deviation $\Delta \omega fb$ is more than 0, the FB pressure increase amount $\Delta P2fb$ increases proportionally as the yaw rate deviation $\Delta \omega fb$ increases.

The FB pressure increase amount $\Delta P3fb$ for the FR outside wheel during a turn is calculated by referring to a third pressure increase amount table 82 based on the yaw rate deviation $\Delta \omega fb$. In the third pressure increase amount table 82, the horizontal axis is the yaw rate deviation $\Delta \omega fb$, while the vertical axis is the FB pressure increase amount $\Delta P3fb$. In the present embodiment, when the yaw rate deviation $\Delta \omega fb$ is more than 0, the FB pressure increase amount $\Delta P3fb$ is 0, and when the yaw rate deviation $\Delta \omega fb$ is less than 0, the FB pressure increase amount $\Delta P3fb$ increases proportionally as absolute value of the yaw rate deviation $\Delta \omega fb$ increases.

The FB pressure increase amount $\Delta P4fb$ for the RR outside wheel during a turn is calculated by referring to a fourth pressure increase amount table 83 based on the yaw rate deviation $\Delta \omega fb$. In the fourth pressure increase amount table 83, the horizontal axis is the yaw rate deviation $\Delta \omega fb$, while the vertical axis is the FB pressure increase amount $\Delta P4fb$. In the present embodiment, when the yaw rate deviation $\Delta \omega fb$ is more than 0, the FB pressure increase amount $\Delta P4fb$ is 0, and when the yaw rate deviation $\Delta \omega fb$ is less than 0, the FB pressure increase amount $\Delta P4fb$ increases proportionally as absolute value of the yaw rate deviation $\Delta \omega fb$ increases.

Namely, in the FB control amount operating section 19, when the yaw rate deviation $\Delta \omega fb$ is more than 0, because the actual yaw rate is smaller than the lateral G standard yaw rate $\omega\_low$, the FB control amount for each wheel is set in a direction in which the yaw rate increases (in other words, in a direction in which the yaw rate deviation $\Delta \omega fb$

is canceled out). Specifically, the FB pressure increase amount is set in a direction in which the brake hydraulic pressure on the FR inside wheel during the turn and on the RR inside wheel during the turn increases, and the FB pressure increase amount is also set such that the brake hydraulic pressure on the FR outside wheel during the turn and on the RR outside wheel during the turn does not increase.

In contrast, when the yaw rate deviation $\Delta\omega fb$ is less than 0, because the actual yaw rate is larger than the lateral G standard yaw rate $\omega\_low$, the FB control amount for each wheel is set in a direction in which the yaw rate decreases (in other words, in a direction in which the yaw rate deviation $\Delta\omega fb$ is canceled out). Specifically, the FB pressure increase amount is set in a direction in which the brake hydraulic pressure on the FR outside wheel during the turn and on the RR outside wheel during the turn increases, and the FB pressure increase amount is also set such that the brake hydraulic pressure on the FR inside wheel during the turn and on the RR inside wheel during the turn does not increase.

In the braking force control amount operating section 17, a value obtained by adding together the FF pressure increase amount $\Delta P1ff$ of the FR inside wheel during a turn, the FB pressure increase amount $\Delta P1fb$ of the FR inside wheel during a turn, and the inside wheel pressure decrease rate $\Delta Pd$ is taken as the overall control amount for the FR inside wheel during a turn. In addition, a value obtained by adding together the FF pressure increase amount $\Delta P2ff$ of the RR inside wheel during a turn, the FB pressure increase amount $\Delta P2fb$ of the RR inside wheel during a turn, and the inside wheel pressure decrease rate $\Delta Pd$ is taken as the overall control amount for the RR inside wheel during a turn. Moreover, the FB pressure increase amount $\Delta P3fb$ for the FR outside wheel during a turn is taken as the overall control amount for the FR outside wheel during a turn, and the FB pressure increase amount $\Delta P4fb$ for the RR outside wheel during a turn is taken as the overall control amount for the RR outside wheel during a turn. These four values are output to the braking device 10.

The braking device 10 controls the braking pressure of each wheel in accordance with the control amounts for the respective wheels that have been input.

According to the vehicle turning control device of the present embodiment, when a vehicle is being steered through a turn, in addition to the yaw moment that is generated in response to the steering angle, because it is also possible to generate yaw moment by controlling the braking pressure based on the FF control amount which is calculated based on the steering input (i.e., the steering angle), the amount of yaw moment during normal steering can be increased and the vehicle steering can be assisted, so that the turning performance and responsiveness of the vehicle are improved. Moreover, because the amount of assist As is decided such that the gain is increased as the vehicle speed becomes slower, the lower the vehicle speed region, the more the turning performance and responsiveness of the vehicle are improved. In contrast, because the amount of assist As decreases as the vehicle speed increases, it is possible to suppress the braking force when the vehicle is traveling at high speed from becoming excessive and reducing the stability of the vehicle.

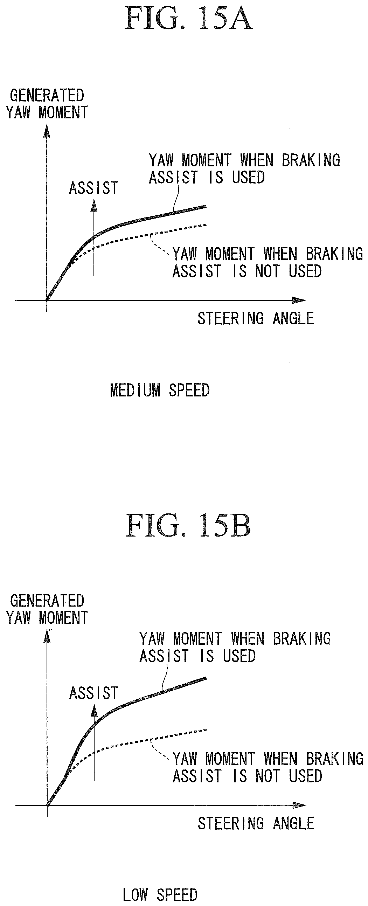

FIGS. 15A and 15B are graphs which show in typical form relationships between the steering angle and the yaw moment generated in a vehicle according to the present embodiment. FIG. 15A shows a relationship when the vehicle is traveling at medium speed, while FIG. 15B shows a relationship when the vehicle is travelling at low speed. In each case, the yaw moment generated in the vehicle can be increased by the amount of the yaw moment generated by the braking, and the amount of the increase in the yaw moment is greater at low speed than at medium speed.

According to the vehicle turning control device of the present embodiment, because the brake pressure is controlled based on an overall control amount that is obtained by adding the FB control amount, which is calculated based on the vehicle behavior (i.e., the lateral G and the yaw rate), to the FF control amount, which is calculated based on the steering input (i.e., the steering angle), the intervention timing for the turning assist braking control is brought forward, and it is possible, while also improving the responsiveness of the steering, to improve the stability of the vehicle and the followability of the steering when the vehicle is making a turn. For example, in a step in which a steering input is made and that steering input is then held, such as when a vehicle is making a steady-state circular turn or the like, variations in the amount of control are restricted and the ability of the vehicle to follow the road is improved.

In the present embodiment, the brake pressure is controlled based on an overall control amount that is obtained by adding the FB control amount, which is calculated based on the vehicle behavior (i.e., the lateral G and the yaw rate), to the FF control amount, which is calculated based on the steering input (i.e., the steering angle), however, it is also possible for a turn to be assisted by controlling the brake pressure based solely on the FF control amount, which is calculated based on the steering input (i.e., the steering angle) without the FB control amount, which is calculated based on the vehicle behavior (i.e., the lateral G and the yaw rate) being added thereto. This invention is still applicable in this type of structure as well.

[Examples of other embodiments]

In other case, this invention is not limited to the above described embodiments.

For example, in the above-described embodiment 2, an overall control amount is calculated by adding together the FF control amount and the FB control amount, however, it is also possible to calculate an overall control amount by multiplying the FF control amount by the FB control amount.

Moreover, instead of the detection values from a vehicle speed sensor, it is also possible to use an estimated vehicle speed that is estimated based on detection values from a wheel speed sensor.

Moreover, in the above-described embodiment 2, by disabling the FF pressure increase amount ΔP1ff for the FR inside wheel during a turn and the FF pressure increase amount ΔP2ff for the RR inside wheel during a turn when the vehicle is moving at high speed, the vehicle behavior is prevented from becoming unstable because of steering (i.e., turning) assist braking at high vehicle speeds, however, it is possible for the FF pressure increase amount for the inside wheels during a turn to also be disabled when the steering speed is extremely large or when ABS is in operation.

According to the vehicle turning control device of the present invention, it is possible to achieve both control that stabilizes the yaw moment generated in a vehicle body, and control that improves the steering response. As a result, the turning intention of a driver is reflected with an highly accurate response, and the steering feel is improved even when the vehicle is travelling at low speed. Moreover, the turning performance of the vehicle is improved, and the ability of the vehicle to follow the road is improved.

## Claims

1.  A vehicle turning control device capable of generating yaw moment in a vehicle body by applying braking force to left and right wheels based on the running state of a vehicle,
    the vehicle turning control device comprising:

    a steering amount detecting device (3) that detects an amount of steering of the vehicle;
    a vehicle speed detecting device (4) that detects or estimates a speed of the vehicle;
    an assist amount setting device (23) that, based on detection signals from the steering amount detecting device (3), decides a turning assist amount such that a first gain becomes high as the steering amount increases;
    a braking force control amount operating section (17) that decides a braking force control amount based on the turning assist amount decided by the assist amount setting section (23); and
    a braking control device (10) that controls the braking force based on the braking force control amount decided by the braking force control amount operating section (17),
    **characterized in that**
    the assist amount setting device (23) decides the turning assist amount based on detection signals from the vehicle speed detecting device (4) such that a second gain is raised as the speed of the vehicle decreases, and
    the assist amount setting device (23) sets the turning assist amount according to a product obtained by multiplying the first gain corresponding to the steering amount of the vehicle and the second gain corresponding to the speed of the vehicle together.

2.  The vehicle turning control device according to Claim 1, wherein
    the assist amount setting device (23) decides the turning assist amount according to a feed-forward control amount calculated based on the steering amount of the vehicle and a feedback control amount calculated based on a lateral acceleration of the vehicle and a yaw rate of the vehicle.

## Patentansprüche

1.  Fahrzeug-Drehsteuervorrichtung, welche dazu geeignet ist, ein Giermoment in einem Fahrzeugkörper zu erzeugen, indem auf Grundlage des Fahrzustands eines Fahrzeugs eine Bremskraft auf linke und rechte Räder eingewirkt wird, wobei die Fahrzeug-Drehsteuervorrichtung umfasst:

    eine Lenkmengen-Erfassungsvorrichtung (3), welche einen Betrag eines Lenkens des Fahrzeugs erfasst;
    eine Fahrzeuggeschwindigkeits-Erfassungsvorrichtung (4), welche eine Geschwindigkeit des Fahrzeugs erfasst oder schätzt;
    eine Unterstützungsmengen-Festlegungsvorrichtung (23), welche auf Grundlage von Erfassungssignalen von der Lenkmengen-Erfassungsvorrichtung (3) einen Dreh-Unterstützungsbetrag derart entscheidet, dass eine erste Verstärkung groß wird, wenn die Lenkmenge zunimmt;
    einen Bremskraft-Steuerbetrag-Betätigungsabschnitt (17), welcher einen Bremskraft-Steuerbetrag auf Grundlage des Dreh-Unterstützungsbetrags entscheidet, welcher von dem Unterstützungsbetrag-Festlegungsabschnitt (23) entschieden wird; und

eine Brems-Steuervorrichtung (10), welche die Bremskraft auf Grundlage des Bremskraft-Steuerbetrags steuert, welcher von dem Bremskraft-Steuerbetrag-Betätigungsabschnitt (17) entschieden wird,

**dadurch gekennzeichnet, dass**

die Unterstützungsbetrag-Festlegungsvorrichtung (23) den Dreh-Unterstützungsbetrag auf Grundlage von Detektionssignalen von der Fahrzeuggeschwindigkeit-Erfassungsvorrichtung (4) derart entscheidet, dass eine zweite Verstärkung erhöht wird, wenn die Geschwindigkeit des Fahrzeugs abnimmt, und

die Unterstützungsbetrag-Festlegungsvorrichtung (23) den Dreh-Unterstützungsbetrag gemäß einem Produkt festlegt, welches erhalten wird, indem die erste Verstärkung, welche dem Lenkbetrag des Fahrzeugs entspricht, und die zweite Verstärkung, welche der Geschwindigkeit des Fahrzeugs entspricht, miteinander multipliziert werden.

2. Fahrzeug-Drehsteuervorrichtung nach Anspruch 1, wobei

die Unterstützungsbetrag-Festlegungsvorrichtung (23) den Dreh-Unterstützungsbetrag gemäß eines Vorwärtssteuerungs-Steuerbetrags, welcher auf Grundlage des Lenkbetrags des Fahrzeugs berechnet wird, sowie eines Rückkopplungs-Steuerbetrags, welcher auf Grundlage einer lateralen Beschleunigung des Fahrzeugs und einer Gierrate des Fahrzeugs berechnet wird, entscheidet.

## Revendications

1. Dispositif de commande de virage destiné à un véhicule capable de générer un moment de lacet dans un châssis de véhicule en appliquant une force de freinage aux roues de gauche et de droite sur la base de l'état de fonctionnement d'un véhicule,

le dispositif de commande de virage destiné à un véhicule comprenant :

un dispositif de détection de quantité de conduite (3) qui détecte une quantité de conduite du véhicule ;

un dispositif de détection de vitesse du véhicule (4) qui détecte ou estime une vitesse du véhicule ;

un dispositif de réglage de quantité d'assistance (23) qui, sur la base des signaux de détection provenant du dispositif de détection de quantité de conduite (3), décide d'une quantité d'assistance au virage de sorte qu'un premier gain devienne élevé au fur et à mesure que la quantité de conduite augmente ;

une section de détermination de quantité de contrôle de la force de freinage (17) qui décide d'une quantité de contrôle de la force de freinage sur la base de la quantité d'assistance au virage décidée par la section de réglage de quantité d'assistance (23) ; et

un dispositif de contrôle de freinage (10) qui contrôle la force de freinage sur la base de la quantité de contrôle de force de freinage décidée par la section de détermination de quantité de contrôle de la force de freinage (17),

**caractérisé en ce que**

le dispositif de réglage de quantité d'assistance (23) décide de la quantité d'assistance au virage sur la base des signaux de détection provenant du dispositif de détection de vitesse du véhicule (4) de sorte qu'un second gain soit augmenté au fur et à mesure que la vitesse du véhicule diminue, et

le dispositif de réglage de quantité d'assistance (23) définit la quantité d'assistance au virage selon un produit obtenu en multipliant ensemble le premier gain correspondant à la quantité de conduite du véhicule et le second gain correspondant à la vitesse du véhicule.

2. Dispositif de commande de virage destiné à un véhicule selon la revendication 1, dans lequel

le dispositif de réglage de quantité d'assistance (23) décide de la quantité d'assistance au virage selon une quantité de contrôle en marche avant calculée sur la base de la quantité de conduite du véhicule, et d'une quantité de contrôle en marche avant calculée sur la base d'une accélération latérale du véhicule et d'un taux de lacet du véhicule.

FIG. 1

FIG. 1 — Block diagram showing: STEERING ANGLE SENSOR (3) → STEERING ANGLE STANDARD YAW RATE OPERATING SECTION (11); VEHICLE SPEED SENSOR (4) → STEADY-STATE STANDARD YAW RATE OPERATING SECTION (12) with GAIN Kv (21); LATERAL G SENSOR (5) → LATERAL G STANDARD YAW RATE OPERATING SECTION (14); CORRECTING SECTION (15) → LIMIT STANDARD YAW RATE → LIMIT YAW RATE DEVIATION OPERATING SECTION (16) → $\Delta \omega fb$ → FB CONTROL AMOUNT OPERATING SECTION (19) → FB CONTROL AMOUNT → BRAKING DEVICE (10); ACCELERATOR OPENING ANGLE SENSOR (7); $\mu$ CALCULATING SECTION (8); YAW RATE SENSOR (6); overall system 1A(1), ECU 2.

EP 2 543 563 B1

# FIG. 2

34 — CORRECTION COEFFICIENT HS2 OPERATING SECTION

HS2

32

STEADY-STATE STANDARD YAW RATE $\omega\_high$

31 — DISTRIBUTION COEFFICIENT HB1 OPERATING SECTION

HB1

REFERENCE LIMIT STANDARD YAW RATE OPERATING SECTION

$\omega\_t1$

×

+

$\omega\_TAR$ REFERENCE STANDARD YAW RATE

LATERAL G STANDARD YAW RATE $\omega\_low$

HS1

HS3

33 — CORRECTION COEFFICIENT HS1 OPERATING SECTION

35 — CORRECTION COEFFICIENT HS3 OPERATING SECTION

# FIG. 3

STEERING ANGLE STANDARD YAW RATE

LIMIT STANDARD YAW RATE

YAW RATE

LATERAL G STANDARD YAW RATE

TIME

SUDDEN STEERING CHANGE
→TURNING DIRECTION

GENTLE STEERING CHANGE～
RESTORE TO CENTER STEERING
→STABLE DIRECTION

# FIG. 4

40

HB1a

1

0  VEHICLE SPEED

→ HB1a

41

HB1b

1

0  RATE OF CHANGE
IN THE YAW RATE

→ HB1b

42

HB1c

1

0  DEVIATION
INTEGRAL IN
THE YAW RATE

→ HB1c

43

HB1d

1

RETURN TO
CENTER
STEERING    0    INCREASE
TURNING OF
STEERING WHEEL

STEERING WHEEL
TURNING SPEED

→ HB1d

×  → HB1

# FIG. 5

44

HS1a

1

0  STEERING
SPEED

→ HS1a

45

HS1b

1

0  FRONT LOAD

→ HS1b

×  → HS1

23

# FIG. 6

PROCESSING TO DECIDE HS2

S01

$\mu > \mu$ th ?

NO

YES

S02

$\delta > \delta$ th ?
or
$\Delta G > \Delta G$ th ?
or
$\Delta \gamma > \Delta \gamma$ th ?

NO

YES

S03

DECIDE HS2 BY
SUBTRACTION PROCESSING

S04

DECIDE HS2 BY
ADDITION PROCESSING

END

# FIG. 7

# FIG. 8

## FIG. 9

# FIG. 10

EP 2 543 563 B1

# FIG. 11

# FIG. 12

FIG. 13

1C(1)

2

BRAKING FORCE CONTROL AMOUNT OPERATING SECTION — 17

18 — FF CONTROL AMOUNT OPERATING SECTION — FF CONTROL AMOUNT

19 — FB CONTROL AMOUNT OPERATING SECTION — FB CONTROL AMOUNT

BRAKING DEVICE — 10

As

$\Delta \omega$fb

23 — ASSIST AMOUNT OPERATING SECTION

24 — GAIN Ks — Ks — STEERING ANGLE — 0

25 — GAIN Kv — Kv — 1 — VEHICLE SPEED

×

16 — YAW RATE DEVIATION OPERATING SECTION

14 — LATERAL G STANDARD YAW RATE OPERATING SECTION

3 — STEERING ANGLE SENSOR

4 — VEHICLE SPEED SENSOR

5 — LATERAL G SENSOR

6 — YAW RATE SENSOR

29

# FIG. 14

18 — FF CONTROL AMOUNT OPERATING SECTION

19 — FB CONTROL AMOUNT OPERATING SECTION

HYDRAULIC PRESSURE CONTROL AMOUNT FOR FR INSIDE WHEEL DURING TURN

HYDRAULIC PRESSURE CONTROL AMOUNT FOR FR OUTSIDE WHEEL DURING TURN

HYDRAULIC PRESSURE CONTROL AMOUNT FOR RR INSIDE WHEEL DURING TURN

HYDRAULIC PRESSURE CONTROL AMOUNT FOR RR OUTSIDE WHEEL DURING TURN

ASSIST AMOUNT As

STEERING ANGLE

K1fr — As1

K1rr — As2

61 — PRESSURE INCREASE AMOUNT / ASSIST AMOUNT

62 — UPPER LIMIT VALUE

65 — PRESSURE INCREASE AMOUNT / ASSIST AMOUNT

66 — UPPER LIMIT VALUE

68 — LIMIT — $\Delta$P1ffK

69 — LIMIT — $\Delta$P2ffK

63 — GAIN / VEHICLE SPEED

67 — GAIN / VEHICLE SPEED

$\times$ — $\Delta$P1ff

$\times$ — $\Delta$P2ff

70

MASTER CYLINDER

VEHICLE SPEED

LATERAL G

71 — RATE OF PRESSURE DECREASE / VEHICLE SPEED

72 — RATE OF PRESSURE DECREASE / LATERAL G

$\times$

$-1$

$\times$ — $\Delta$Pd

YAW RATE DEVIATION $\Delta\omega$fb

80 — PRESSURE INCREASE AMOUNT / DEVIATION — $\Delta$P1fb

82 — PRESSURE INCREASE AMOUNT / DEVIATION — $\Delta$P3fb

81 — PRESSURE INCREASE AMOUNT / DEVIATION — $\Delta$P2fb

83 — PRESSURE INCREASE AMOUNT / DEVIATION — $\Delta$P4fb

30

# FIG. 15A

MEDIUM SPEED

# FIG. 15B

LOW SPEED

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2572860 B
- JP 2005153716 A
- JP 2002037048 A
- DE 10636920 A1